# EUROPEAN PATENT APPLICATION

(11) **EP 4 796 368 A1**
(43) Date of publication of application: **26.08.2026**
(21) Application number: 24884916.8
(22) Date of filing: 31.10.2024
(51) Int. Cl.: B60L 50/60, H02J 7/00, H02M 3/335, H01M 10/46

(54) **VEHICLE-MOUNTED POWER SUPPLY, VEHICLE BATTERY SYSTEM, AND VEHICLE**

(30) Priority: 31.10.2023 CN 202311439356; 31.10.2023 CN 202311433705
(71) Applicant: BYD Company Limited, Shenzhen, Guangdong 518118 (CN)
(72) Inventor: LIN, Shuishan, Shenzhen, Guangdong 518118 (CN); WANG, Xinqiang, Shenzhen, Guangdong 518118 (CN); CAO, Dongkui, Shenzhen, Guangdong 518118 (CN); HUANG, Jian, Shenzhen, Guangdong 518118 (CN)
(74) Representative: Taor, Simon Edward William
(86) International application number: PCT/CN2024/128970
(87) International publication number: WO 2025/092917

(57) **Abstract**

A vehicle has a battery system that includes an on-board power supply. At least a part of apparatuses of the on-board power supply are detachably connected to a vehicle. The on-board power supply includes a first battery and an electrical energy conversion apparatus. The first battery is a power battery of a vehicle, and the first battery is configured to supply power to an external load when in a detached state. A first end of the electrical energy conversion apparatus is connected to the first battery. A second end of the electrical energy conversion apparatus is adapted to be connected to the external load. In the on-board power supply, the electrical energy conversion apparatus is configured to convert electrical energy from the first battery to supply power to the external load.

## Description

### CROSS-REFERENCES TO RELATED APPLICATIONS

This application claims priority to Chinese Patent Application No. 202311439356.0, filed on October 31, 2023 and entitled "ON-BOARD POWER SUPPLY, BATTERY SYSTEM OF VEHICLE, AND VEHICLE", which is incorporated herein by reference in its entirety for all purposes; and
this application claims priority to Chinese Patent Application No. 202311433705.8, filed on October 31, 2023 and entitled "ON-BOARD POWER SUPPLY, BATTERY SYSTEM OF VEHICLE, AND VEHICLE", which is incorporated herein by reference in its entirety for all purposes.

### TECHNICAL FIELD

This application relates to the field of electric vehicle technologies, and more specifically, to an on-board power supply, a battery system of a vehicle, and a vehicle.

### BACKGROUND

A related battery system of a vehicle is in an idle state and underutilized when not supplying power for a power load and/or a non-power load of the vehicle. When needing external power, a vehicle owner needs to find or provide additional power supply.

### SUMMARY

This application aims to provide new technical solutions of an on-board power supply.

According to a first aspect of this application, an on-board power supply is provided. At least a part of apparatuses of the on-board power supply are detachably connected to a vehicle. The on-board power supply includes:
a first battery, where the first battery is a power battery of a vehicle, and the first battery is configured to supply power to an external load when in a detached state; and
an electrical energy conversion apparatus, where a first end of the electrical energy conversion apparatus is connected to the first battery; a second end of the electrical energy conversion apparatus is adapted to be connected to the external load; and in the on-board power supply, the electrical energy conversion apparatus is configured to convert electrical energy from the first battery to supply power to the external load.

Optionally, the external load includes a first external load; the electrical energy conversion apparatus includes a voltage conversion apparatus; the first end of the voltage conversion apparatus is connected to the first battery; the second end of the voltage conversion apparatus is adapted to be connected to the first external load; and in the on-board power supply, the voltage conversion apparatus is configured to: convert a voltage of the first battery and output a direct current to the first external load.

Optionally, the voltage conversion apparatus includes a high-voltage DC/low-voltage DC converter of the vehicle and a low-voltage output assembly of the vehicle, and the high-voltage DC/low-voltage DC converter of the vehicle and the low-voltage output assembly of the vehicle are both vehicle apparatuses removable from the vehicle.

Optionally, the high-voltage DC/low-voltage DC converter includes: a first primary conversion circuit, a first isolation conversion circuit, and a first secondary conversion circuit;
the low-voltage output assembly includes a switch control circuit and a voltage conversion circuit; and
a first end of the first primary conversion circuit is connected to the first battery, a second end of the first primary conversion circuit is connected to a first end of the first isolation conversion circuit, a second end of the first isolation conversion circuit is connected to a first end of the first secondary conversion circuit, a second end of the first secondary conversion circuit is connected to a first end of the switch control circuit, a second end of the switch control circuit is connected to a first end of the voltage conversion circuit, and a second end of the voltage conversion circuit is connected to the first external load.

Optionally, the voltage conversion apparatus includes an external voltage conversion apparatus, and the external voltage conversion apparatus includes the high-voltage DC/low-voltage DC converter.

Optionally, the high-voltage DC/low-voltage DC converter includes: a first primary conversion circuit, a first isolation conversion circuit, and a first secondary conversion circuit; and
a first end of the first primary conversion circuit is connected to a power battery assembly, a second end of the first primary conversion circuit is connected to a first end of the first isolation conversion circuit, a second end of the first isolation conversion circuit is connected to a first end of the first secondary conversion circuit, and a second end of the first secondary conversion circuit is connected to the first external load.

Optionally, the on-board power supply further includes a storage compartment, and the first battery and the voltage conversion apparatus are accommodated in the storage compartment.

Optionally, the storage compartment is provided with a locking mechanism, and the locking mechanism is configured to open when an electrical connection between the on-board power supply and the vehicle is disconnected, to allow detachment of the on-board power supply.

Optionally, the storage compartment is provided with a low-voltage output interface, and a second end of the voltage conversion apparatus is connected to the low-voltage output interface to output a direct current.

Optionally, the storage compartment is further provided with an electrical connection interface, the first battery is connected to the electrical connection interface, and the first battery is adapted to be electrically connected to the vehicle through the electrical connection interface.

Optionally, the external load includes a second external load; the electrical energy conversion apparatus includes an alternating current-direct current conversion apparatus; a first end of the alternating current-direct current conversion apparatus is connected to the first battery; a second end of the alternating current-direct current conversion apparatus is adapted to be connected to the second external load; and in the on-board power supply, the alternating current-direct current conversion apparatus is configured to convert a direct current from the first battery into an alternating current for the second external load.

Optionally, the vehicle alternating current-direct current conversion apparatus includes a high-voltage DC/DC converter, a high-voltage AC/DC converter, and an alternating current output assembly that are sequentially connected, and the high-voltage DC/DC converter, the high-voltage AC/DC converter, and the alternating current output assembly are all vehicle apparatuses removable from the vehicle.

Optionally, the alternating current-direct current conversion apparatus includes a high-voltage DC/DC converter, a high-voltage AC/DC converter, and an alternating current output assembly that are sequentially connected; and
the high-voltage DC/DC converter and the high-voltage AC/DC converter are vehicle apparatuses removable from the vehicle, and the alternating current output assembly is an external apparatus.

Optionally, the high-voltage DC/DC converter includes a first secondary conversion circuit, a first isolation conversion circuit, and a first primary conversion circuit;
the high-voltage AC/DC converter includes a power factor correction circuit;
the alternating current output assembly includes the switch control circuit; and
a first end of the first secondary conversion circuit is connected to the first battery, a second end of the first secondary conversion circuit is connected to a first end of the first isolation conversion circuit, a second end of the first isolation conversion circuit is connected to a first end of the first primary conversion circuit, a second end of the first primary conversion circuit is connected to a first end of the power factor correction circuit, a second end of the power factor correction circuit is connected to a first end of the switch control circuit, and the second end of the switch control circuit is adapted to be connected to the second external load.

Optionally, the alternating current-direct current conversion apparatus includes the high-voltage AC/DC converter and the alternating current output assembly that are connected to each other; and
the high-voltage AC/DC converter and the alternating current output assembly are both vehicle apparatuses removable from the vehicle.

Optionally, the alternating current-direct current conversion apparatus includes the high-voltage AC/DC converter and the alternating current output assembly that are connected to each other; and
the high-voltage AC/DC converter is a vehicle apparatus removable from the vehicle, and the alternating current output assembly is an external apparatus.

Optionally, the high-voltage AC/DC converter includes a power factor correction circuit;
the alternating current output assembly includes the switch control circuit; and
a first end of the power factor correction circuit is connected to the first battery, a second end of the power factor correction circuit is connected to a first end of the switch control circuit, and a second end of the switch control circuit is connected to the second external load.

Optionally, the on-board power supply further includes the storage compartment, and the first battery and the alternating current-direct current conversion apparatus are accommodated in the storage compartment.

Optionally, the storage compartment is provided with a locking mechanism, and the locking mechanism is configured to open when an electrical connection between the on-board power supply and the vehicle is disconnected, to allow detachment of the on-board power supply.

Optionally, the storage compartment is provided with an alternating current output interface, and the second end of the alternating current-direct current conversion apparatus is connected to the alternating current output interface.

Optionally, the storage compartment is further provided with an electrical connection interface, the first battery is connected to the electrical connection interface, and the first battery is adapted to be electrically connected to the vehicle through the electrical connection interface.

According to a second aspect of this application, a battery system of a vehicle is provided, including:
the on-board power supply according to any implementation of the first aspect; and
a second battery, where the second battery is a non-power battery of the vehicle.

Optionally, the first battery is connected to the second battery through the high-voltage DC/low-voltage DC converter.

Optionally, the second battery is a non-power battery of the vehicle; a first end of the second battery is connected to the voltage conversion apparatus; and a second end of the second battery is connected to a vehicle non-power load.

According to a third aspect of this application, a vehicle is provided, including the battery system according to any implementation of the second aspect.

In the on-board power supply provided in this application, the power battery in the battery system of the vehicle may be detached from the vehicle, and forms a portable power supply with the electrical energy conversion apparatus. The electrical energy conversion apparatus may convert the voltage of the power battery to supply power to the external load. In this way, the battery system of the vehicle is fully utilized when in an idle state, and an external direct current power requirement of a vehicle owner is met, thereby improving vehicle use experience of the vehicle owner.

In the on-board power supply provided in this application, the power battery in the battery system of the vehicle may be detached from the vehicle, and forms a portable power supply with the voltage conversion apparatus. The voltage conversion apparatus may convert the voltage of the power battery and output the direct current to the first external load. In this way, the battery system of the vehicle is fully utilized when in an idle state, and the external direct current power requirement of the vehicle owner is met, thereby improving the vehicle use experience of the vehicle owner.

In the on-board power supply provided in this application, the power battery in the battery system of the vehicle may be detached from the vehicle, and forms a portable power supply with the alternating current conversion apparatus. The alternating current-direct current conversion apparatus may convert the direct current from the power battery into the alternating current for the second external load. In this way, the battery system of the vehicle is fully utilized when in an idle state, and an external alternating current power requirement of the vehicle owner is met, thereby improving the vehicle use experience of the vehicle owner.

According to the following detailed description of example embodiments of this specification with reference to the accompanying drawings, other features and advantages of embodiments of this specification become clear.

### BRIEF DESCRIPTION OF DRAWINGS

The accompanying drawings incorporated into this specification and constituting a part of this specification show embodiments of this specification, and are used, together with descriptions of the accompanying drawings, to explain the principles of embodiments of this specification.
FIG. 1 is a block diagram of a structure of an on-board power supply according to an embodiment of this application;
FIG. 2 is a block diagram of a structure of an on-board power supply according to an embodiment of this application;
FIG. 3 is a diagram of a battery system of a vehicle with a power battery detached from the battery system;
FIG. 4 is a block diagram of a structure of an on-board power supply according to an embodiment of this application;
FIG. 5 is a diagram of a battery system of a vehicle with a power battery, a high-voltage DC/low-voltage DC converter, and a low-voltage output assembly detached from the battery system;
FIG. 6 is a schematic of a circuit of a high-voltage DC/low-voltage DC converter according to an embodiment of this application;
FIG. 7 is a block diagram of a structure of an on-board power supply according to an embodiment of this application;
FIG. 8 is a block diagram of a structure of a battery system of a vehicle according to an embodiment of this application;
FIG. 9 is a block diagram of a structure of a battery system of a vehicle according to an embodiment of this application;
FIG. 10 is a schematic of a circuit of a high-voltage DC/low-voltage DC converter and a high-voltage AC/DC converter according to an embodiment of this application;
FIG. 11 is a block diagram of a structure of a battery system of a vehicle according to an embodiment of this application;
FIG. 12 is a block diagram of a structure of a voltage conversion apparatus according to an embodiment of this application;
FIG. 13 is a block diagram of a structure of a storage compartment according to an embodiment of this application;
FIG. 14 is a block diagram of a structure of an on-board power supply according to an embodiment of this application;
FIG. 15 is a block diagram of a structure of an on-board power supply according to an embodiment of this application;
FIG. 16 is a diagram of a battery system of a vehicle with a power battery and an alternating current-direct current conversion apparatus detached from the battery system;
FIG. 17 is a schematic of a circuit of a high-voltage DC/DC converter and a high-voltage AC/DC converter according to an embodiment of this application;
FIG. 18 is a block diagram of a structure of an on-board power supply according to an embodiment of this application;
FIG. 19 is a diagram of a battery system of a vehicle with a part of structures of both a power battery and an alternating current-direct current conversion apparatus detached from the battery system;
FIG. 20 is a block diagram of a structure of an on-board power supply according to an embodiment of this application;
FIG. 21 is a diagram of a battery system of a vehicle with a part of structures of both a power battery and an alternating current-direct current conversion apparatus detached from the battery system;
FIG. 22 is a block diagram of a structure of an on-board power supply according to an embodiment of this application;
FIG. 23 is a diagram of a battery system of a vehicle with a part of structures of both a power battery and an alternating current-direct current conversion apparatus detached from the battery system;
FIG. 24 is a block diagram of a structure of a battery system of a vehicle according to an embodiment of this application;
FIG. 25 is a schematic of a circuit of a high-voltage DC/low-voltage DC converter according to an embodiment of this application;
FIG. 26 is a block diagram of a structure of a battery system of a vehicle according to an embodiment of this application; and
FIG. 27 is a block diagram of a structure of a battery system of a vehicle according to an embodiment of this application.

Reference numeral:
100: on-board power supply;
101: first battery;
102: electrical energy conversion apparatus;
103: voltage conversion apparatus;
104: high-voltage DC/low-voltage DC converter;
105: low-voltage output assembly;
106: first primary conversion circuit;
107: first isolation conversion circuit;
108: first secondary conversion circuit;
109: switch control circuit;
110: voltage conversion circuit;
111: storage compartment;
112: locking mechanism;
113: low-voltage output interface;
114: electrical connection interface;
115: alternating current-direct current conversion apparatus;
116: high-voltage DC/DC converter;
117: high-voltage AC/DC converter;
118: alternating current output assembly;
119: power factor correction circuit;
200: battery system;
201: second battery.

### DETAILED DESCRIPTION OF PREFERRED EMBODIMENTS

Example embodiments of this specification are described in detail with reference to the accompanying drawings.

The following description of at least one example embodiment is merely illustrative and shall not be construed as any limitation to embodiments of this specification, and application or use thereof.

It should be noted that similar reference numerals and letters indicate similar items in the following accompany drawings. Therefore, once an item is defined in one accompany drawing, the item does not need to be further discussed in subsequent accompanying drawings.

### <Embodiments of an on-board power supply>

### Embodiment 1

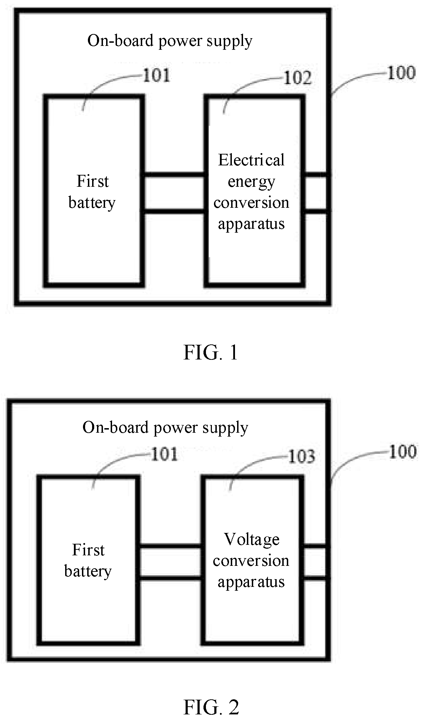

FIG. 1 shows an on-board power supply 100 according to an embodiment of this application. At least a part of apparatuses of the on-board power supply 100 are detachably connected to a vehicle. As shown in FIG. 1, the on-board power supply 100 in this embodiment includes a first battery 101 and an electrical energy conversion apparatus.

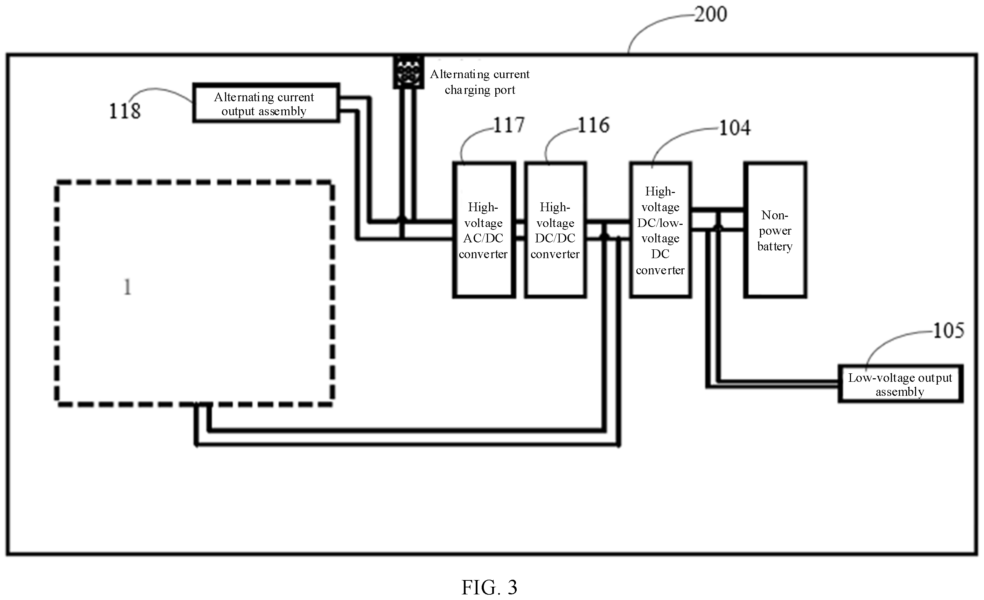

The first battery 101 is a power battery of the vehicle. The first battery 101 is configured to supply power to an external load when in a detached state. FIG. 3 is a diagram of a battery system 200 of a vehicle with a power battery detached from the battery system 200. A location of a dashed box 1 is a position of the power battery in the battery system 200 of the vehicle.

A first end of the electrical energy conversion apparatus 102 is connected to the first battery 101. A second end of the electrical energy conversion apparatus 102 is adapted to be connected to the external load. In the on-board power supply 100, and the electrical energy conversion apparatus 102 is configured to convert electrical energy from the first battery 101 to supply power to the external load.

In the on-board power supply 100 provided in this application, the power battery in the battery system 200 of the vehicle may be detached from the vehicle, and forms a portable power supply with the electrical energy conversion apparatus 102. The electrical energy conversion apparatus 102 may convert the voltage of the power battery to supply power to the external load. In this way, the battery system 200 of the vehicle is fully utilized when in an idle state, and an external direct current power requirement of a vehicle owner is met, thereby improving vehicle use experience of the vehicle owner.

### Embodiment 2

Refer to FIG. 2. An external load includes a first external load, an electrical energy conversion apparatus 102 includes a voltage conversion apparatus 103, a first end of the voltage conversion apparatus 103 is connected to a first battery 101, and a second end of the voltage conversion apparatus 103 is adapted to be connected to the first external load. In an on-board power supply 100, the voltage conversion apparatus 103 is configured to: convert a voltage of the first battery 101 and output a direct current to the first external load.

Optionally, the first external load is a direct current electrical load.

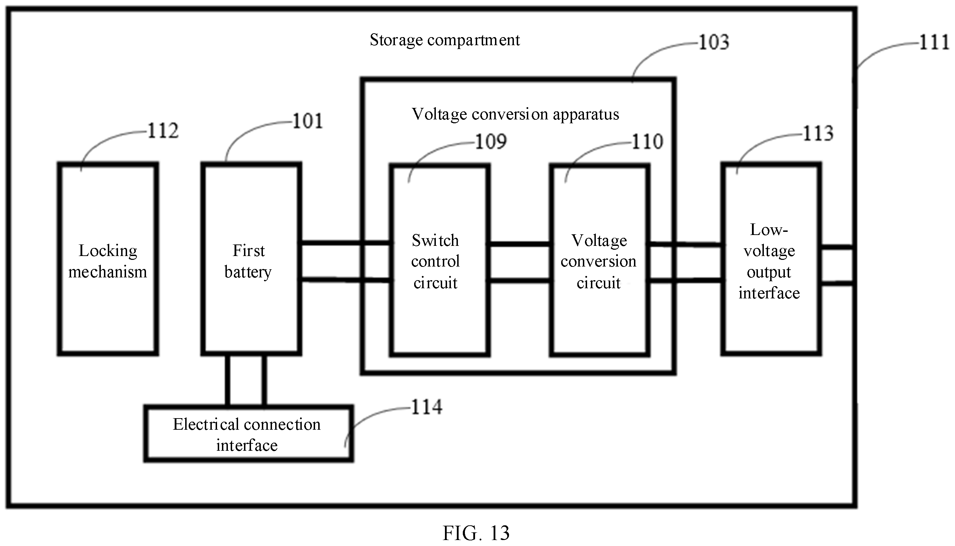

In an embodiment, refer to FIG. 13. The on-board power supply 100 further includes a storage compartment 111. The first battery 101 and the voltage conversion apparatus 103 are accommodated in the storage compartment 111.

Refer to FIG. 13. The storage compartment 111 is provided with a locking mechanism 112. The locking mechanism 112 is configured to open when an electrical connection between the on-board power supply 100 and a vehicle is disconnected, to allow detachment of the on-board power supply 100.

Refer to FIG. 13. The storage compartment 111 is provided with a low-voltage output interface 113. The second end of the voltage conversion apparatus 103 is connected to the low-voltage output interface 113 to output a direct current. The storage compartment 111 is further provided with an electrical connection interface 114, the first battery 101 is connected to the electrical connection interface 114, and the first battery 101 is adapted to be electrically connected to the vehicle through the electrical connection interface 114.

In the on-board power supply 100 provided in this embodiment, the power battery in a battery system 200 of the vehicle may be detached from the vehicle, and forms a portable power supply with the voltage conversion apparatus 103. The voltage conversion apparatus 103 may convert the voltage of the power battery and output the direct current to the first external load. In this way, the battery system 200 of the vehicle is fully utilized when in an idle state, and the external direct current power requirement of a vehicle owner is met, thereby improving vehicle use experience of the vehicle owner.

### Embodiment 3

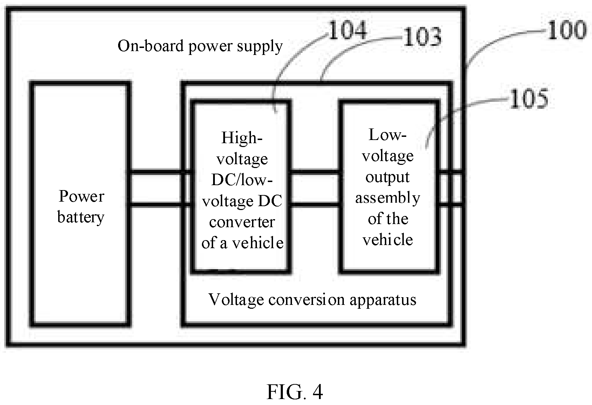

In an embodiment, a first battery 101 is a power battery of a vehicle. A voltage conversion apparatus 103 includes a high-voltage DC/low-voltage DC converter 104 of the vehicle and a low-voltage output assembly 105 of the vehicle. For a block diagram of a structure of an on-board power supply 100 in this embodiment, refer to FIG. 4.

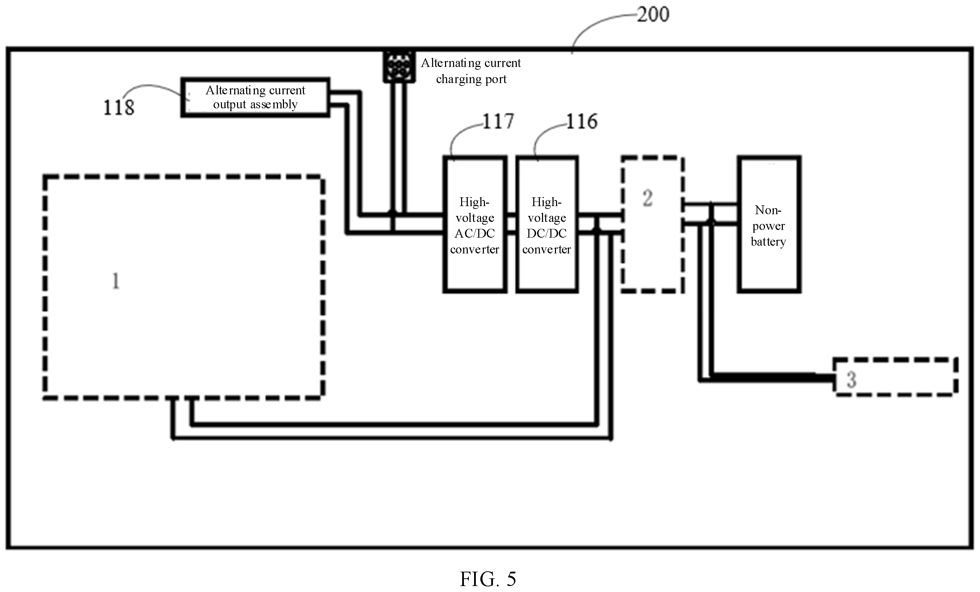

FIG. 5 is a diagram of a battery system 200 of a vehicle with a power battery, a high-voltage DC/low-voltage DC converter 104, and a low-voltage output assembly 105 detached from the battery system 200. A location of a dashed box 1 is a position of the power battery in the battery system 200 of the vehicle. A location of a dashed box 2 is a position of the high-voltage DC/low-voltage DC converter 104 in the battery system 200 of the vehicle. A location of a dashed box 3 is a position of the low-voltage output assembly 105 in the battery system 200 of the vehicle.

In the on-board power supply 100, a first end of the high-voltage DC/low-voltage DC converter 104 is connected to the power battery, a second end of the high-voltage DC/low-voltage DC converter 104 is connected to a first end of the low-voltage output assembly 105, and a second end of the low-voltage output assembly 105 is connected to a first external load.

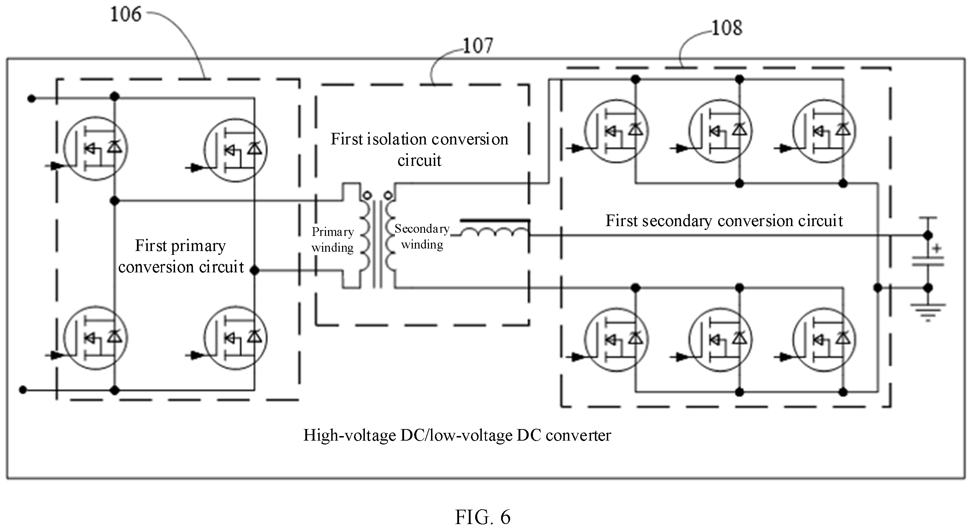

Refer to FIG. 6. The high-voltage DC/low-voltage DC converter 104 includes: a first primary conversion circuit 106, a first isolation conversion circuit 107, and a first secondary conversion circuit 108.

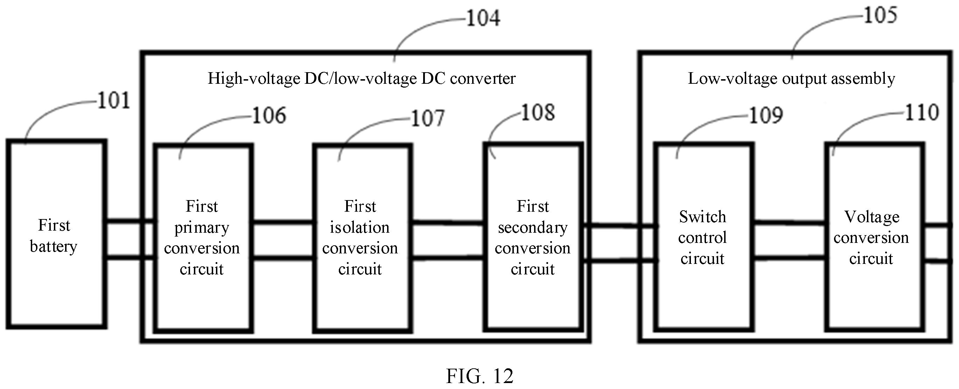

Refer to FIG. 12. The low-voltage output assembly 105 includes a switch control circuit 109 and a voltage conversion circuit 110.

Refer to FIG. 12. A first end of the first primary conversion circuit 106 is connected to the power battery, a second end of the first primary conversion circuit 106 is connected to a first end of the first isolation conversion circuit 107, a second end of the first isolation conversion circuit 107 is connected to a first end of the first secondary conversion circuit 108, a second end of the first secondary conversion circuit 108 is connected to a first end of the switch control circuit 109, a second end of the switch control circuit 109 is connected to a first end of the voltage conversion circuit 110, and a second end of the voltage conversion circuit 110 is connected to the first external load.

The first primary conversion circuit 106 is configured to: receive a direct current from the power battery, convert the direct current into an alternating current, and transmit the alternating current to a primary winding of the first isolation conversion circuit 107. The first isolation conversion circuit 107 is configured to: receive the alternating current whose voltage value is a first voltage from the first primary conversion circuit 106 through the primary winding, generate an alternating current whose voltage value is a second voltage on a secondary winding, and transmit the generated alternating current to the first secondary conversion circuit 108. The first secondary conversion circuit 108 is configured to: receive the alternating current from the secondary winding, convert the alternating current into a direct current, and transmit the direct current to the switch control circuit 109. The direct current from the first secondary circuit is transmitted to the voltage conversion circuit 110 through the switch control circuit 109. The voltage conversion circuit 110 is configured to: convert a voltage of the received direct current and output the direct current to the first external load.

The low-voltage output assembly 105 of the vehicle includes one control switch and one voltage conversion circuit 110.

The low-voltage output assembly 105 of the vehicle includes a plurality of switch control circuits 109 and a plurality of voltage conversion circuits 110. Each switch control circuit 109 and a corresponding voltage conversion circuit 110 form one branch. A first end of each branch is connected to the high-voltage DC/low-voltage DC converter 104, and a second end of each branch is connected to a corresponding first external load. In this way, a voltage of the power battery may be converted into different power supply voltages, supplying power to loads requiring different power supply voltages.

Refer to FIG. 13. The on-board power supply 100 further includes a storage compartment 111. The power battery of the vehicle, the high-voltage DC/low-voltage DC converter 104 of the vehicle, and the low-voltage output assembly 105 of the vehicle are accommodated in the storage compartment 111.

Refer to FIG. 13. The storage compartment 111 is provided with a locking mechanism 112. The locking mechanism 112 is configured to open when an electrical connection between the on-board power supply 100 and the vehicle is disconnected, to allow detachment of the on-board power supply 100.

Refer to FIG. 13. The storage compartment 111 is provided with a low-voltage output interface 113. A second end of the low-voltage output assembly 105 of the vehicle is connected to the low-voltage output interface 113 to output a direct current.

Refer to FIG. 13. The storage compartment 111 is further provided with an electrical connection interface 114. The power battery of the vehicle is connected to the electrical connection interface 114. The power battery of the vehicle is adapted to be electrically connected to the vehicle through the electrical connection interface 114.

In the on-board power supply 100 provided in this embodiment, both the power battery and the voltage conversion apparatus 103 in the battery system 200 of the vehicle may be detached from the vehicle, and form a portable power supply. The voltage conversion apparatus 103 may convert the voltage of the power battery and output the direct current to the first external load. In this way, the battery system 200 of the vehicle is fully utilized when in an idle state, and the external direct current power requirement of a vehicle owner is met, thereby improving vehicle use experience of the vehicle owner.

### Embodiment 4

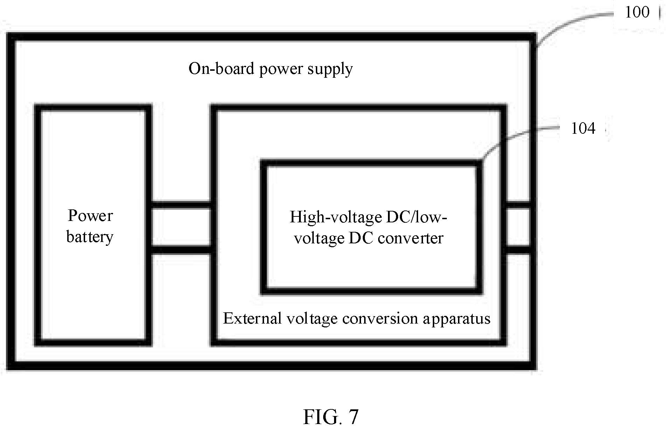

In an embodiment, a first battery 101 is a power battery of a vehicle. A voltage conversion apparatus 103 includes an external voltage conversion apparatus 103. The external voltage conversion apparatus 103 includes a high-voltage DC/low-voltage DC converter 104. For a block diagram of a structure of an on-board power supply 100 in this embodiment, refer to FIG. 7.

In the on-board power supply 100, a first end of the high-voltage DC/low-voltage DC converter 104 is connected to the power battery, and a second end of the high-voltage DC/low-voltage DC converter 104 is connected to a first external load.

The high-voltage DC/low-voltage DC converter 104 includes: a first primary conversion circuit 106, a first isolation conversion circuit 107, and a first secondary conversion circuit 108. For a specific schematic of a circuit, refer to FIG. 6.

A first end of the first primary conversion circuit 106 is connected to the power battery, a second end of the first primary conversion circuit 106 is connected to a first end of the first isolation conversion circuit 107, a second end of the first isolation conversion circuit 107 is connected to a first end of the first secondary conversion circuit 108, and a second end of the first secondary conversion circuit 108 is connected to the first external load.

The first primary conversion circuit 106 is configured to: receive a direct current from the power battery, convert the direct current into an alternating current, and transmit the alternating current to a primary winding of the first isolation conversion circuit 107. The first isolation conversion circuit 107 is configured to: receive the alternating current whose voltage value is a first voltage from the first primary conversion circuit 106 through the primary winding, generate an alternating current whose voltage value is a second voltage on a secondary winding, and transmit the generated alternating current to the first secondary conversion circuit 108. The first secondary conversion circuit 108 is configured to: receive the alternating current from the secondary winding, convert the alternating current into a direct current, and transmit the direct current to the first external load.

Refer to FIG. 13. The on-board power supply 100 further includes a storage compartment 111. The power battery of the vehicle is accommodated in the storage compartment 111.

Refer to FIG. 13. The storage compartment 111 is provided with a locking mechanism 112. The locking mechanism 112 is configured to open when an electrical connection between the power battery and the vehicle is disconnected, to allow detachment of the on-board power supply 100.

Refer to FIG. 13. The storage compartment 111 is provided with a low-voltage output interface 113. A second end of a low-voltage output assembly 105 of the vehicle is connected to the low-voltage output interface 113 to output a direct current.

The storage compartment 111 is provided with a first electrical connection interface 114 and a second electrical connection interface 114. The power battery of the vehicle is connected to the vehicle through the first electrical connection interface 114. The power battery of the vehicle is connected to the external voltage conversion apparatus 103 through the second electrical connection interface 114.

In the on-board power supply 100 provided in this embodiment, the power battery in a battery system 200 of the vehicle may be detached from the vehicle, and forms a portable power supply with the external voltage conversion apparatus 103. The voltage conversion apparatus 103 may convert the voltage of the power battery and output the direct current to the first external load. In this way, the battery system 200 of the vehicle is fully utilized when in an idle state, and the external direct current power requirement of a vehicle owner is met, thereby improving vehicle use experience of the vehicle owner.

### Embodiment 5

In an embodiment, an on-board power supply 100 includes a first battery 101, a voltage conversion apparatus 103, and an alternating current-direct current conversion apparatus 115. For the first battery 101 and the voltage conversion apparatus 103, refer to any one of the foregoing embodiments.

A first end of the alternating current-direct current conversion apparatus 115 is connected to the first battery 101, and a second end of the alternating current-direct current conversion apparatus 115 is adapted to be connected to a first external load. In the on-board power supply 100, the alternating current-direct current conversion apparatus 115 is configured to convert a direct current from the first battery 101 into an alternating current for the first external load.

In the on-board power supply 100 provided in this embodiment, the power battery in a battery system 200 of a vehicle may be detached from the vehicle, and forms a portable power supply with the voltage conversion apparatus 103 and the alternating current conversion apparatus. The voltage conversion apparatus 103 converts a voltage of the power battery and outputs a direct current to the first external load. The alternating current-direct current conversion apparatus 115 may convert a direct current from the power battery into an alternating current for the first external load. In this way, the battery system 200 of the vehicle is fully utilized when in an idle state, and external direct and alternating current power requirements of a vehicle owner are met, thereby improving vehicle use experience of the vehicle owner.

### Embodiment 6

In an embodiment, an on-board power supply 100 includes a first battery 101, a voltage conversion apparatus 103, and an alternating current-direct current conversion apparatus 115. For the first battery 101 and the voltage conversion apparatus 103, refer to any one of the foregoing embodiments.

The alternating current-direct current conversion apparatus 115 is a vehicle alternating current-direct current conversion apparatus 115. The vehicle alternating current-direct current conversion apparatus 115 includes a high-voltage DC/DC converter 116, a high-voltage AC/DC converter 117, and an alternating current output assembly 118 that are sequentially connected.

In the on-board power supply 100, a first end of the vehicle alternating current-direct current conversion apparatus 115 is connected to the power battery of a vehicle, and a second end of the vehicle alternating current-direct current conversion apparatus 115 is adapted to be connected to a first external load.

In the vehicle, the first end of the vehicle alternating current-direct current conversion apparatus 115 is connected to the power battery, and the second end of the vehicle alternating current-direct current conversion apparatus 115 is adapted to be detachably connected to an alternating current electrical load of the vehicle.

In the on-board power supply 100, a first end of the high-voltage DC/DC converter 116 is connected to the power battery, a second end of the high-voltage DC/DC converter 116 is connected to a first end of the high-voltage AC/DC converter 117, a second end of the high-voltage AC/DC converter 117 is connected to a first end of the alternating current output assembly 118, and a second end of the alternating current output assembly 118 is connected to the first external load.

The high-voltage DC/DC converter 116 includes: a second primary conversion circuit, a second isolation conversion circuit, and a second secondary conversion circuit. The high-voltage AC/DC converter 117 includes a power factor correction circuit 119. The alternating current output assembly 118 includes a switch control circuit 109.

A first end of the second secondary conversion circuit is connected to the first battery 101, a second end of the second secondary conversion circuit is connected to a first end of the second isolation conversion circuit, a second end of the second isolation conversion circuit is connected to a first end of the second primary conversion circuit, a second end of the second primary conversion circuit is connected to a first end of the power factor correction circuit 119, a second end of the power factor correction circuit 119 is connected to a first end of the switch control circuit 109, and the second end of the switch control circuit 109 is adapted to be connected to the first external load.

The second secondary conversion circuit is configured to: receive a direct current from the first battery 101, convert the direct current into an alternating current, and transmit the alternating current to a secondary winding of the second isolation conversion circuit. The second isolation conversion circuit is configured to: receive the alternating current whose voltage value is a first voltage from the second secondary conversion circuit through the secondary winding, generate an alternating current whose voltage value is a second voltage on a primary winding, and transmit the generated alternating current to the second primary conversion circuit. The second primary conversion circuit is configured to: receive the alternating current from the primary winding, convert the alternating current into a direct current, and transmit the direct current to the power factor correction circuit 119. The power factor correction circuit 119 is configured to convert the received direct current from the first primary conversion circuit 106 into an alternating current. The alternating current from the power factor correction circuit 119 is transmitted to the first external load through the switch control circuit 109 of the alternating current output assembly 118.

### Embodiment 7

In an embodiment, an on-board power supply 100 includes a first battery 101, a voltage conversion apparatus 103, and an alternating current-direct current conversion apparatus 115. For the first battery 101 and the voltage conversion apparatus 103, refer to any one of the foregoing embodiments.

The alternating current-direct current conversion apparatus 115 includes a high-voltage DC/DC converter 116, a high-voltage AC/DC converter 117, and an alternating current output assembly 118 that are sequentially connected. The high-voltage DC/DC converter 116 and the high-voltage AC/DC converter 117 are vehicle apparatuses removable from a vehicle, and the alternating current output assembly 118 is an external apparatus.

In the on-board power supply 100, a first end of the high-voltage DC/DC converter 116 is connected to the power battery, a second end of the high-voltage DC/DC converter 116 is connected to a first end of the high-voltage AC/DC converter 117, a second end of the high-voltage AC/DC converter 117 is connected to a first end of the alternating current output assembly 118, and a second end of the alternating current output assembly 118 is connected to a first external load.

The high-voltage DC/DC converter 116 includes: a second primary conversion circuit, a second isolation conversion circuit, and a second secondary conversion circuit. The high-voltage AC/DC converter 117 includes a power factor correction circuit 119. The alternating current output assembly 118 includes a switch control circuit 109.

A first end of the second secondary conversion circuit is connected to the first battery 101, a second end of the second secondary conversion circuit is connected to a first end of the second isolation conversion circuit, a second end of the second isolation conversion circuit is connected to a first end of the second primary conversion circuit, a second end of the second primary conversion circuit is connected to a first end of the power factor correction circuit 119, a second end of the power factor correction circuit 119 is connected to a first end of the switch control circuit 109, and the second end of the switch control circuit 109 is adapted to be connected to the first external load.

The second secondary conversion circuit is configured to: receive a direct current from the first battery 101, convert the direct current into an alternating current, and transmit the alternating current to a secondary winding of the second isolation conversion circuit. The second isolation conversion circuit is configured to: receive the alternating current whose voltage value is a first voltage from the second secondary conversion circuit through the secondary winding, generate an alternating current whose voltage value is a second voltage on a primary winding, and transmit the generated alternating current to the second primary conversion circuit. The second primary conversion circuit is configured to: receive the alternating current from the primary winding, convert the alternating current into a direct current, and transmit the direct current to the power factor correction circuit 119. The power factor correction circuit 119 is configured to convert the received direct current from the first primary conversion circuit 106 into an alternating current. The alternating current from the power factor correction circuit 119 is transmitted to the first external load through the switch control circuit 109 of the alternating current output assembly 118.

### Embodiment 8

In an embodiment, an on-board power supply 100 includes a first battery 101, a voltage conversion apparatus 103, and an alternating current-direct current conversion apparatus 115. For the first battery 101 and the voltage conversion apparatus 103, refer to any one of the foregoing embodiments.

The alternating current-direct current conversion apparatus 115 includes a high-voltage AC/DC converter 117 and an alternating current output assembly 118 that are connected to each other. The high-voltage AC/DC converter 117 and the alternating current output assembly 118 are both vehicle apparatuses removable from a vehicle.

In the on-board power supply 100, a first end of the high-voltage AC/DC converter 117 is connected to the power battery, a second end of the high-voltage AC/DC converter 117 is connected to a first end of the alternating current output assembly 118, and a second end of the alternating current output assembly 118 is connected to a first external load.

The high-voltage AC/DC converter 117 includes a power factor correction circuit 119. The alternating current output assembly 118 includes a switch control circuit 109.

The power factor correction circuit 119 is configured to convert a received direct current from the first battery 101 into an alternating current. The alternating current from the power factor correction circuit 119 is transmitted to the first external load through the switch control circuit 109 of the alternating current output assembly 118.

### Embodiment 9

In an embodiment, an on-board power supply 100 includes a first battery 101, a voltage conversion apparatus 103, and an alternating current-direct current conversion apparatus 115. For the first battery 101 and the voltage conversion apparatus 103, refer to any one of the foregoing embodiments.

The alternating current-direct current conversion apparatus 115 includes a high-voltage AC/DC converter 117 and an alternating current output assembly 118 that are connected to each other. The high-voltage AC/DC converter 117 is a vehicle apparatus removable from a vehicle. The alternating current output assembly 118 is an external apparatus.

In the on-board power supply 100, a first end of the high-voltage AC/DC converter 117 is connected to the power battery, a second end of the high-voltage AC/DC converter 117 is connected to a first end of the alternating current output assembly 118, and a second end of the alternating current output assembly 118 is connected to a first external load.

The high-voltage AC/DC converter 117 includes a power factor correction circuit 119. The alternating current output assembly 118 includes a switch control circuit 109. The power factor correction circuit 119 is configured to convert a received direct current from the first battery 101 into an alternating current. The alternating current from the power factor correction circuit 119 is transmitted to the first external load through the switch control circuit 109 of the alternating current output assembly 118.

### Embodiment 10

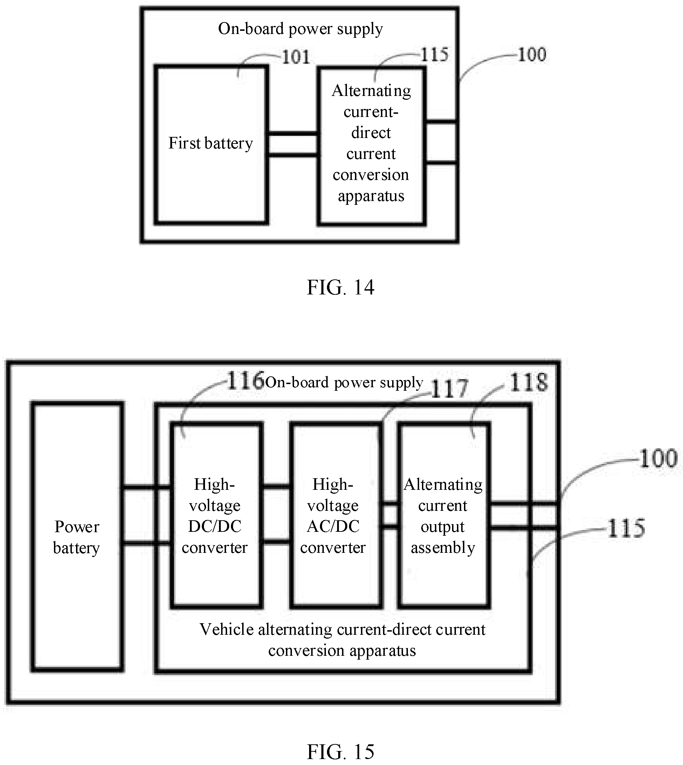

Refer to FIG. 14. An external load includes a second external load, an electrical energy conversion apparatus 102 includes an alternating current-direct current conversion apparatus 115, a first end of the alternating current-direct current conversion apparatus 115 is connected to a first battery 101, and a second end of the alternating current-direct current conversion apparatus 115 is adapted to be connected to the second external load. In an on-board power supply 100, the alternating current-direct current conversion apparatus 115 is configured to convert a direct current from the first battery 101 into an alternating current for the second external load.

Optionally, the second external load is an alternating current electrical load.

In an embodiment, the on-board power supply 100 further includes a storage compartment 111. The first battery 101 and the alternating current-direct current conversion apparatus 115 are accommodated in the storage compartment 111.

The storage compartment 111 is provided with a locking mechanism 112. The locking mechanism 112 is configured to open when an electrical connection between the on-board power supply 100 and a vehicle is disconnected, to allow detachment of the on-board power supply 100.

The storage compartment 111 is provided with an alternating current output interface, and the second end of the alternating current-direct current conversion apparatus 115 is connected to the alternating current output interface to output an alternating current. The storage compartment 111 is further provided with an electrical connection interface 114, the first battery 101 is connected to the electrical connection interface 114, and the first battery 101 is adapted to be electrically connected to the vehicle through the electrical connection interface 114.

In the on-board power supply 100 provided in this embodiment, the power battery in a battery system 200 of the vehicle may be detached from the vehicle, and forms a portable power supply with the alternating current conversion apparatus. The alternating current-direct current conversion apparatus 115 may convert the direct current from the power battery into the alternating current for the second external load. In this way, the battery system 200 of the vehicle is fully utilized when in an idle state, and an external alternating current power requirement of a vehicle owner is met, thereby improving vehicle use experience of the vehicle owner.

### Embodiment 11

In an embodiment, an on-board power supply 100 includes a first battery 101 and an alternating current-direct current conversion apparatus 115. The first battery 101 is a power battery of a vehicle. The alternating current-direct current conversion apparatus 115 is a vehicle alternating current-direct current conversion apparatus 115. The vehicle alternating current-direct current conversion apparatus 115 includes a high-voltage DC/DC converter 116, a high-voltage AC/DC converter 117, and an alternating current output assembly 118 that are sequentially connected. For a block diagram of a structure of the on-board power supply 100 in this embodiment, refer to FIG. 15.

In the on-board power supply 100, a first end of the vehicle alternating current-direct current conversion apparatus 115 is connected to the power battery of the vehicle, and a second end of the vehicle alternating current-direct current conversion apparatus 115 is adapted to be connected to a second external load.

In the vehicle, the first end of the vehicle alternating current-direct current conversion apparatus 115 is connected to the power battery, and the second end of the vehicle alternating current-direct current conversion apparatus 115 is adapted to be detachably connected to an alternating current electrical load of the vehicle.

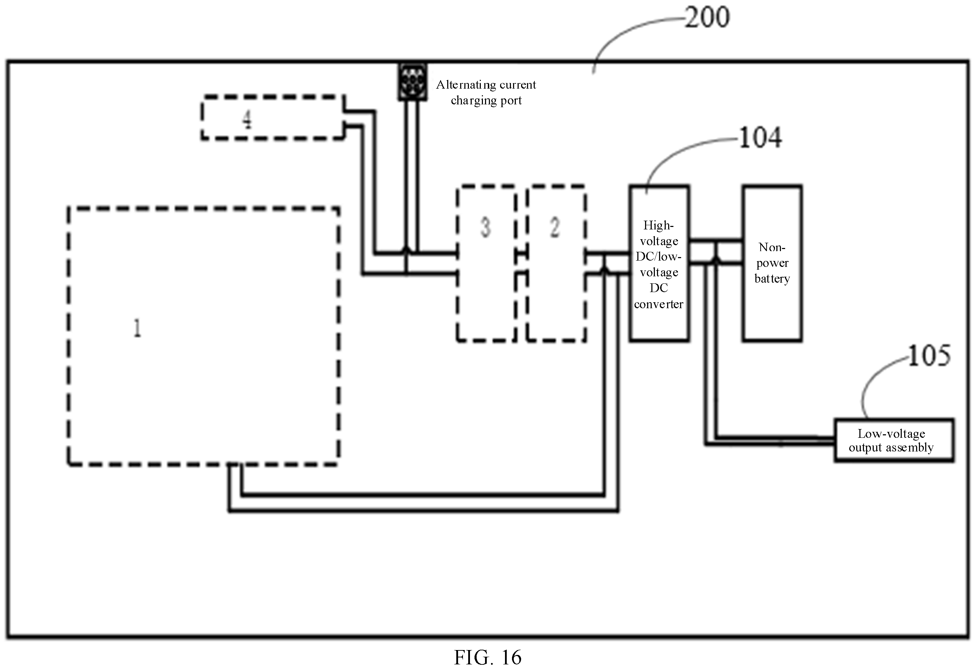

FIG. 16 is a diagram of a battery system 200 of a vehicle with a power battery and an alternating current-direct current conversion apparatus 115 detached from the battery system 200. A location of a dashed box 1 is a position of the power battery in the battery system 200 of the vehicle. A location of a dashed box 2 is a position of the high-voltage DC/DC converter 116 in the battery system 200 of the vehicle. A location of a dashed box 3 is a position of the high-voltage AC/DC converter 117 in the battery system 200 of the vehicle. A location of a dashed box 4 is a position of the alternating current output assembly 118 in the battery system 200 of the vehicle.

Refer to FIG. 15. In the on-board power supply 100, a first end of the high-voltage DC/DC converter 116 is connected to the power battery, a second end of the high-voltage DC/DC converter 116 is connected to a first end of the high-voltage AC/DC converter 117, a second end of the high-voltage AC/DC converter 117 is connected to a first end of the alternating current output assembly 118, and a second end of the alternating current output assembly 118 is connected to the second external load.

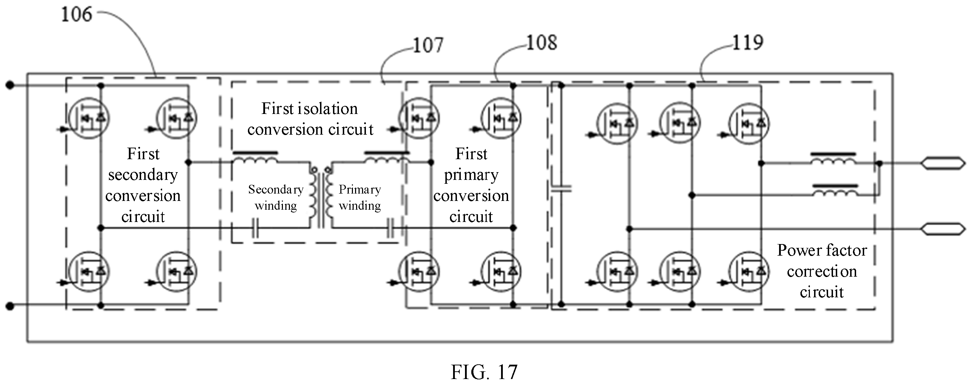

Refer to FIG. 17. The high-voltage DC/DC converter 116 includes: a first primary conversion circuit 106, a first isolation conversion circuit 107, and a first secondary conversion circuit 108. The high-voltage AC/DC converter 117 includes a power factor correction circuit 119. The alternating current output assembly 118 includes a switch control circuit 109.

A first end of the first secondary conversion circuit 108 is connected to the first battery 101, a second end of the first secondary conversion circuit 108 is connected to a first end of the first isolation conversion circuit 107, and a second end of the first isolation conversion circuit 107 is connected to a first end of the first primary conversion circuit 106. A second end of the first primary conversion circuit 106 is connected to a first end of the power factor correction circuit 119, a second end of the power factor correction circuit 119 is connected to a first end of the switch control circuit 109, and a second end of the switch control circuit 109 is adapted to be connected to the second external load.

The first secondary conversion circuit 108 is configured to: receive a direct current from the first battery 101, convert the direct current into an alternating current, and transmit the alternating current to a secondary winding of the first isolation conversion circuit 107. The first isolation conversion circuit 107 is configured to: receive the alternating current whose voltage value is a first voltage from the first secondary conversion circuit 108 through the secondary winding, generate an alternating current whose voltage value is a second voltage on a primary winding, and transmit the generated alternating current to the first primary conversion circuit 106. The first primary conversion circuit 106 is configured to: receive the alternating current from the primary winding, convert the alternating current into a direct current, and transmit the direct current to the power factor correction circuit 119. The power factor correction circuit 119 is configured to convert the received direct current from the first primary conversion circuit 106 into an alternating current. The alternating current from the power factor correction circuit 119 is transmitted to the second external load through the switch control circuit 109 of the alternating current output assembly 118.

The on-board power supply 100 further includes a storage compartment 111. The power battery of the vehicle and the alternating current-direct current conversion apparatus 115 of the vehicle are accommodated in the storage compartment 111.

The storage compartment 111 is provided with a locking mechanism 112. The locking mechanism 112 is configured to open when an electrical connection between the on-board power supply 100 and the vehicle is disconnected, to allow detachment of the on-board power supply 100.

The storage compartment 111 is provided with an alternating current output interface, and the second end of the alternating current-direct current conversion apparatus 115 is connected to the alternating current output interface to output an alternating current. The storage compartment 111 is further provided with an electrical connection interface 114, the first battery 101 is connected to the electrical connection interface 114, and the first battery 101 is adapted to be electrically connected to the vehicle through the electrical connection interface 114.

In the on-board power supply 100 provided in this application, both the power battery and the alternating current conversion apparatus in the battery system 200 may be detached from the vehicle, and form a portable power supply. The alternating current-direct current conversion apparatus 115 may convert the direct current from the power battery into the alternating current for the second external load. In this way, the battery system 200 of the vehicle is fully utilized when in an idle state, and an external alternating current power requirement of a vehicle owner is met, thereby improving vehicle use experience of the vehicle owner.

### Embodiment 12

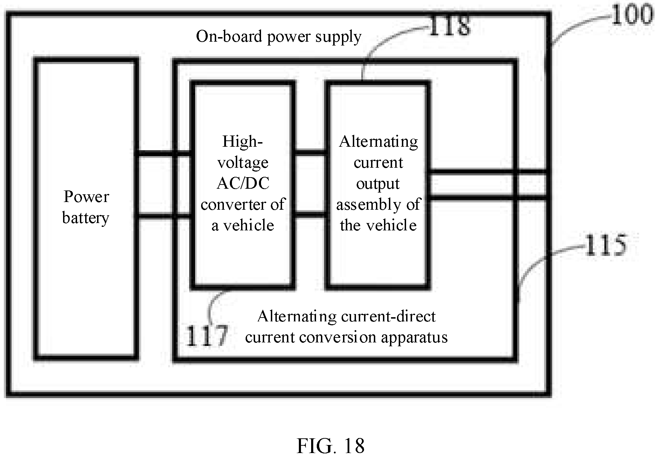

In an embodiment, an on-board power supply 100 includes a first battery 101 and an alternating current-direct current conversion apparatus 115. The first battery 101 is a power battery of a vehicle. The alternating current-direct current conversion apparatus 115 includes a high-voltage DC/DC converter 116, a high-voltage AC/DC converter 117, and an alternating current output assembly 118 that are sequentially connected. The high-voltage DC/DC converter 116 and the high-voltage AC/DC converter 117 are vehicle apparatuses removable from the vehicle, and the alternating current output assembly 118 is an external apparatus. For a block diagram of a structure of the on-board power supply 100 in this embodiment, refer to FIG. 18.

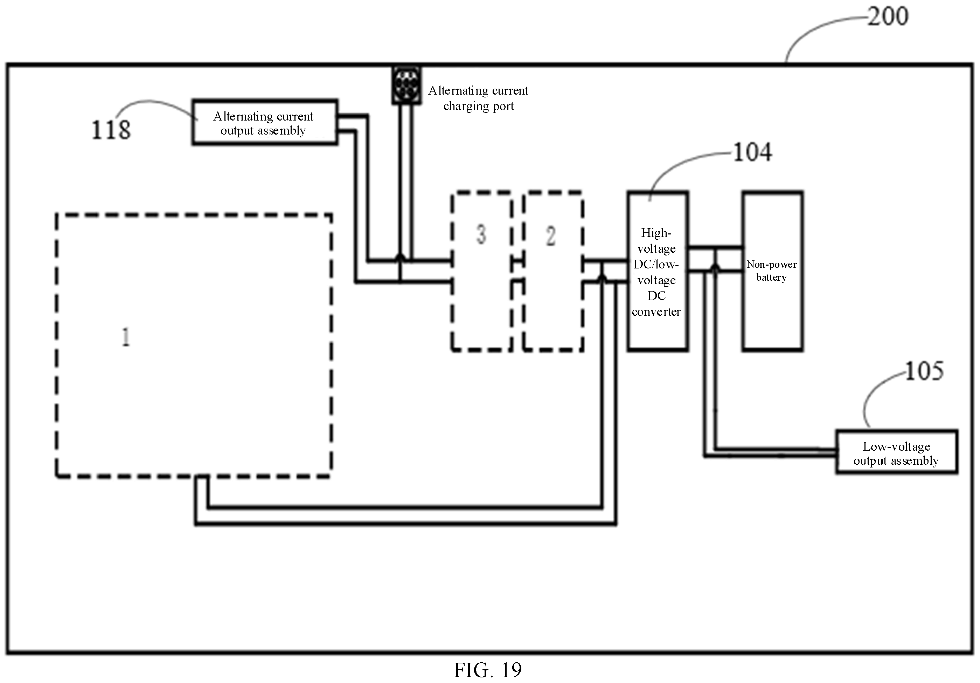

FIG. 19 is a diagram of a battery system 200 of a vehicle with a part of structures of both a power battery and an alternating current-direct current conversion apparatus 115 detached from the battery system 200. A location of a dashed box 1 is a position of the power battery in the battery system 200 of the vehicle. A location of a dashed box 2 is a position of the high-voltage DC/DC converter 116 in the battery system 200 of the vehicle. A location of a dashed box 3 is a position of the high-voltage AC/DC converter 117 in the battery system 200 of the vehicle.

Refer to FIG. 18. In the on-board power supply 100, a first end of the high-voltage DC/DC converter 116 is connected to the power battery, a second end of the high-voltage DC/DC converter 116 is connected to a first end of the high-voltage AC/DC converter 117, a second end of the high-voltage AC/DC converter 117 is connected to a first end of the alternating current output assembly 118, and a second end of the alternating current output assembly 118 is connected to a second external load.

Refer to FIG. 17. The high-voltage DC/DC converter 116 includes: a first primary conversion circuit 106, a first isolation conversion circuit 107, and a first secondary conversion circuit 108. The high-voltage AC/DC converter 117 includes a power factor correction circuit 119. The alternating current output assembly 118 includes a switch control circuit 109.

A first end of the first secondary conversion circuit 108 is connected to the first battery 101, a second end of the first secondary conversion circuit 108 is connected to a first end of the first isolation conversion circuit 107, and a second end of the first isolation conversion circuit 107 is connected to a first end of the first primary conversion circuit 106. A second end of the first primary conversion circuit 106 is connected to a first end of the power factor correction circuit 119, a second end of the power factor correction circuit 119 is connected to a first end of the switch control circuit 109, and a second end of the switch control circuit 109 is adapted to be connected to the second external load.

The first secondary conversion circuit 108 is configured to: receive a direct current from the first battery 101, convert the direct current into an alternating current, and transmit the alternating current to a secondary winding of the first isolation conversion circuit 107. The first isolation conversion circuit 107 is configured to: receive the alternating current whose voltage value is a first voltage from the first secondary conversion circuit 108 through the secondary winding, generate an alternating current whose voltage value is a second voltage on a primary winding, and transmit the generated alternating current to the first primary conversion circuit 106. The first primary conversion circuit 106 is configured to: receive the alternating current from the primary winding, convert the alternating current into a direct current, and transmit the direct current to the power factor correction circuit 119. The power factor correction circuit 119 is configured to convert the received direct current from the first primary conversion circuit 106 into an alternating current. The alternating current from the power factor correction circuit 119 is transmitted to the second external load through the switch control circuit 109 of the alternating current output assembly 118.

The on-board power supply 100 further includes a storage compartment 111. The power battery of the vehicle, the high-voltage DC/DC converter 116, and the high-voltage AC/DC converter 117 are accommodated in the storage compartment 111.

The storage compartment 111 is provided with a locking mechanism 112. The locking mechanism 112 is configured to open when an electrical connection between the power battery and the vehicle is disconnected, to allow detachment of the on-board power supply 100.

The storage compartment 111 is provided with an alternating current output interface, and the second end of the high-voltage AC/DC converter 117 is connected to the alternating current output interface to output an alternating current to the alternating current output assembly 118. The storage compartment 111 is further provided with an electrical connection interface 114, the first battery 101 is connected to the electrical connection interface 114, and the first battery 101 is adapted to be electrically connected to the vehicle through the electrical connection interface 114.

In the on-board power supply 100 provided in this application, the part of structures of both the power battery and the alternating current conversion apparatus in the battery system 200 may be detached from the vehicle, and form a portable power supply with an external apparatus. The alternating current-direct current conversion apparatus 115 may convert the direct current from the power battery into the alternating current for the second external load. In this way, the battery system 200 of the vehicle is fully utilized when in an idle state, and an external alternating current power requirement of a vehicle owner is met, thereby improving vehicle use experience of the vehicle owner.

### Embodiment 13

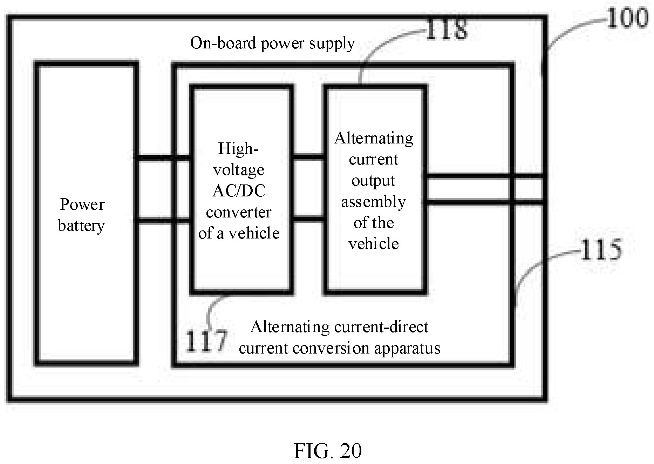

In an embodiment, an on-board power supply 100 includes a first battery 101 and an alternating current-direct current conversion apparatus 115. The first battery 101 is a power battery of a vehicle. The alternating current-direct current conversion apparatus 115 includes a high-voltage AC/DC converter 117 and an alternating current output assembly 118 that are connected to each other. The high-voltage AC/DC converter 117 and the alternating current output assembly 118 are both vehicle apparatuses removable from the vehicle. For a block diagram of a structure of the on-board power supply 100 in this embodiment, refer to FIG. 20.

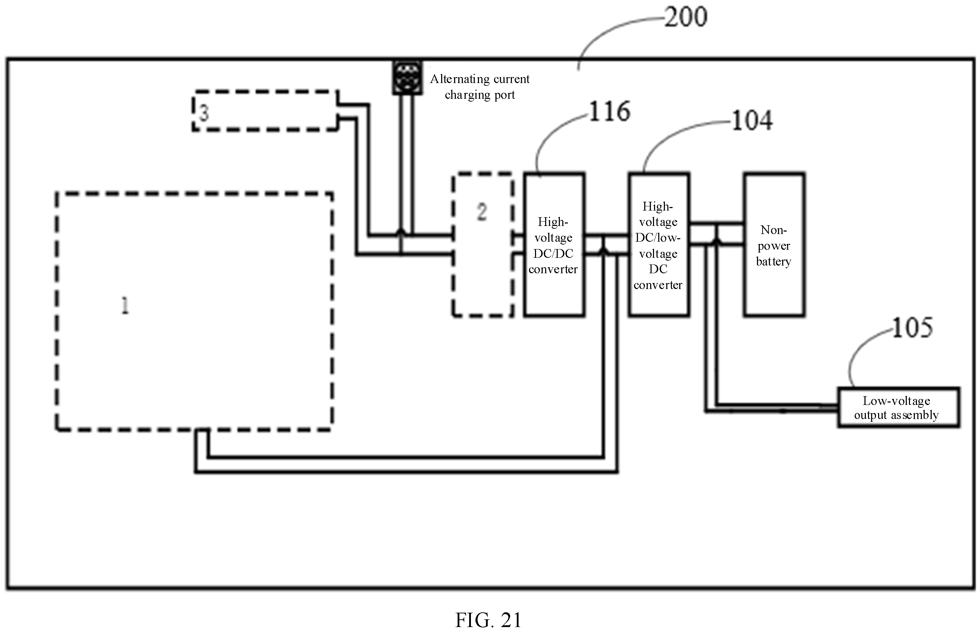

FIG. 21 is a diagram of a battery system 200 of a vehicle with a part of structures of both a power battery and an alternating current-direct current conversion apparatus 115 detached from the battery system 200. A location of a dashed box 1 is a position of the power battery in the battery system 200 of the vehicle. A location of a dashed box 2 is a position of the high-voltage AC/DC converter 117 in the battery system 200 of the vehicle. A location of a dashed box 3 is a position of the alternating current output assembly 118 in the battery system 200 of the vehicle.

Refer to FIG. 20. In the on-board power supply 100, a first end of the high-voltage AC/DC converter 117 is connected to the power battery, a second end of the high-voltage AC/DC converter 117 is connected to a first end of the alternating current output assembly 118, and a second end of the alternating current output assembly 118 is connected to a second external load.

The high-voltage AC/DC converter 117 includes a power factor correction circuit 119. The alternating current output assembly 118 includes a switch control circuit 109. For a schematic of a circuit of the high-voltage AC/DC converter 117, refer to the high-voltage AC/DC converter 117 shown in FIG. 17.

The power factor correction circuit 119 is configured to convert a received direct current from the first battery 101 into an alternating current. The alternating current from the power factor correction circuit 119 is transmitted to the second external load through the switch control circuit 109 of the alternating current output assembly 118.

The on-board power supply 100 further includes a storage compartment 111. The power battery of the vehicle is accommodated in the storage compartment 111.

The storage compartment 111 is provided with a locking mechanism 112. The locking mechanism 112 is configured to open when an electrical connection between the power battery and the vehicle is disconnected, to allow detachment of the on-board power supply 100.

The storage compartment 111 is provided with a first electrical connection interface 114 and a second electrical connection interface 114. The power battery of the vehicle is connected to the vehicle through the first electrical connection interface 114. The power battery of the vehicle is connected to the high-voltage AC/DC converter 117 through the second electrical connection interface 114.

In the on-board power supply 100 provided in this application, both the power battery and the alternating current conversion apparatus in the battery system 200 may be detached from the vehicle, and form a portable power supply. The alternating current-direct current conversion apparatus 115 may convert the direct current from the power battery into the alternating current for the second external load. In this way, the battery system 200 of the vehicle is fully utilized when in an idle state, and an external alternating current power requirement of a vehicle owner is met, thereby improving vehicle use experience of the vehicle owner.

### Embodiment 14

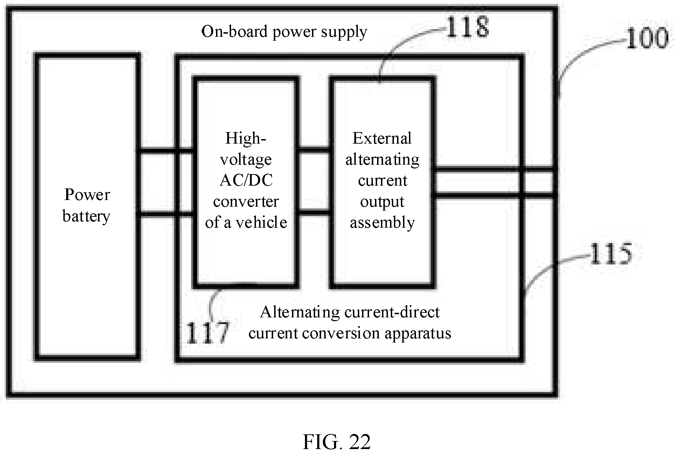

In an embodiment, an on-board power supply 100 includes a first battery 101 and an alternating current-direct current conversion apparatus 115. The first battery 101 is a power battery of a vehicle. The alternating current-direct current conversion apparatus 115 includes a high-voltage AC/DC converter 117 and an alternating current output assembly 118 that are connected to each other. The high-voltage AC/DC converter 117 is a vehicle apparatus removable from the vehicle. The alternating current output assembly 118 is an external apparatus. For a block diagram of a structure of the on-board power supply 100 in this embodiment, refer to FIG. 22.

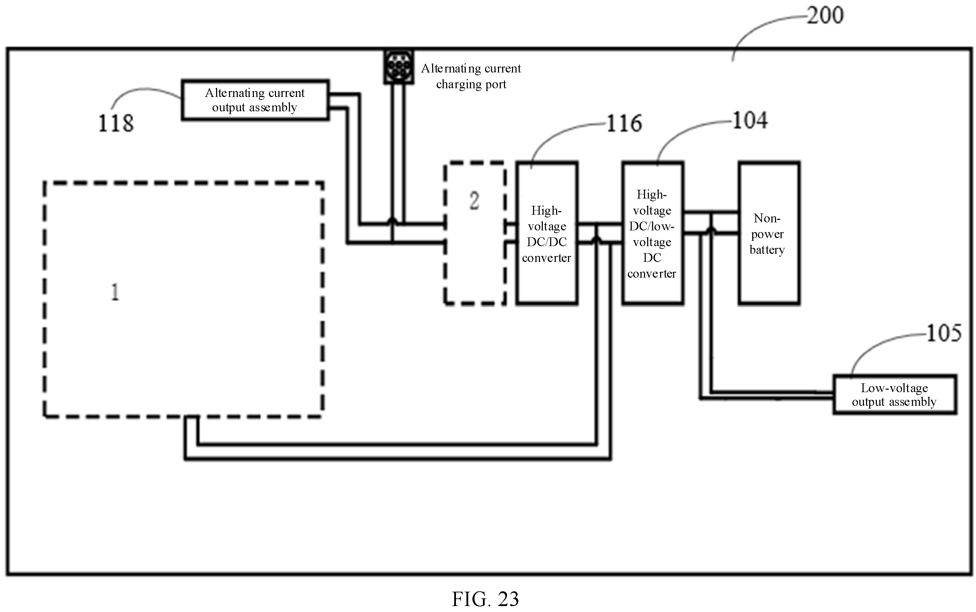

FIG. 23 is a diagram of a battery system 200 of a vehicle with a part of structures of both a power battery and an alternating current-direct current conversion apparatus 115 detached from the battery system 200. A location of a dashed box 1 is a position of the power battery in the battery system 200 of the vehicle. A location of a dashed box 2 is a position of the high-voltage AC/DC converter 117 in the battery system 200 of the vehicle.

Refer to FIG. 22. In the on-board power supply 100, a first end of the high-voltage AC/DC converter 117 is connected to the power battery, a second end of the high-voltage AC/DC converter 117 is connected to a first end of the alternating current output assembly 118, and a second end of the alternating current output assembly 118 is connected to a second external load.

The high-voltage AC/DC converter 117 includes a power factor correction circuit 119. The alternating current output assembly 118 includes a switch control circuit 109. For a schematic of a circuit of the high-voltage AC/DC converter 117, refer to the high-voltage AC/DC converter 117 shown in FIG. 17.

The power factor correction circuit 119 is configured to convert a received direct current from the first battery 101 into an alternating current. The alternating current from the power factor correction circuit 119 is transmitted to the second external load through the switch control circuit 109 of the alternating current output assembly 118.

The on-board power supply 100 further includes a storage compartment 111. The power battery of the vehicle is accommodated in the storage compartment 111.

The storage compartment 111 is provided with a locking mechanism 112. The locking mechanism 112 is configured to open when an electrical connection between the power battery and the vehicle is disconnected, to allow detachment of the on-board power supply 100.

The storage compartment 111 is provided with a first electrical connection interface 114 and a second electrical connection interface 114. The power battery of the vehicle is connected to the vehicle through the first electrical connection interface 114. The power battery of the vehicle is connected to the high-voltage AC/DC converter 117 through the second electrical connection interface 114.

In the on-board power supply 100 provided in this application, the part of structures of both the power battery and the alternating current conversion apparatus in the battery system 200 may be detached from the vehicle, and form a portable power supply with an external apparatus. The alternating current-direct current conversion apparatus 115 may convert the direct current from the power battery into the alternating current for the second external load. In this way, the battery system 200 of the vehicle is fully utilized when in an idle state, and an external alternating current power requirement of a vehicle owner is met, thereby improving vehicle use experience of the vehicle owner.

### Embodiment 15

In an embodiment, an on-board power supply 100 includes a first battery 101, an alternating current-direct current conversion apparatus 115, and a voltage conversion apparatus 103. For the first battery 101 and the alternating current-direct current conversion apparatus 115, refer to any one of the foregoing embodiments.

A first end of the voltage conversion apparatus 103 is connected to the first battery 101, and a second end of the voltage conversion apparatus 103 is adapted to be connected to a second external load. In the on-board power supply 100, the voltage conversion apparatus 103 is configured to: convert a voltage of the first battery 101 and output a direct current to the second external load.

In the on-board power supply 100 provided in this embodiment, the power battery in a battery system 200 of a vehicle may be detached from the vehicle, and forms a portable power supply with the voltage conversion apparatus 103 and the alternating current conversion apparatus. The voltage conversion apparatus 103 converts a voltage of the non-power battery and outputs a direct current to the second external load. The alternating current-direct current conversion apparatus 115 may convert a direct current from the non-power battery into an alternating current for the second external load. In this way, the battery system 200 of the vehicle is fully utilized when in an idle state, and external direct and alternating current power requirements of a vehicle owner are met, thereby improving vehicle use experience of the vehicle owner.

### Embodiment 16

In an embodiment, an on-board power supply 100 includes a first battery 101, an alternating current-direct current conversion apparatus 115, and a voltage conversion apparatus 103. For the first battery 101 and the alternating current-direct current conversion apparatus 115, refer to any one of the foregoing embodiments.

The voltage conversion apparatus 103 includes a high-voltage DC/low-voltage DC converter 104 of a vehicle and a low-voltage output assembly 105 of the vehicle.

In the on-board power supply 100, a first end of the high-voltage DC/low-voltage DC converter 104 is connected to the power battery, a second end of the high-voltage DC/low-voltage DC converter 104 is connected to a first end of the low-voltage output assembly 105, and a second end of the low-voltage output assembly 105 is connected to a second external load.

The high-voltage DC/low-voltage DC converter 104 includes: a second primary conversion circuit, a second isolation conversion circuit, and a second secondary conversion circuit.

The low-voltage output assembly 105 includes a switch control circuit 109 and a voltage conversion circuit 110.

A first end of the second primary conversion circuit is connected to the power battery, a second end of the second primary conversion circuit is connected to a first end of the second isolation conversion circuit, a second end of the second isolation conversion circuit is connected to a first end of the second secondary conversion circuit, a second end of the second secondary conversion circuit is connected to a first end of the switch control circuit 109, a second end of the switch control circuit 109 is connected to a first end of the voltage conversion circuit 110, and a second end of the voltage conversion circuit 110 is connected to the second external load.

The second primary conversion circuit is configured to: receive a direct current from the power battery, convert the direct current into an alternating current, and transmit the alternating current to a primary winding of the second isolation conversion circuit. The second isolation conversion circuit is configured to: receive the alternating current whose voltage value is a first voltage from the second primary conversion circuit through the primary winding, generate an alternating current whose voltage value is a second voltage on a secondary winding, and transmit the generated alternating current to the second secondary conversion circuit. The second secondary conversion circuit is configured to: receive the alternating current from the secondary winding, convert the alternating current into a direct current, and transmit the direct current to the switch control circuit 109. The direct current from the second secondary circuit is transmitted to the voltage conversion circuit 110 through the switch control circuit 109. The voltage conversion circuit 110 is configured to: convert a voltage of the received direct current and output the direct current to the second external load.

The low-voltage output assembly 105 of the vehicle includes one control switch and one voltage conversion circuit 110.

The low-voltage output assembly 105 of the vehicle includes a plurality of switch control circuits 109 and a plurality of voltage conversion circuits 110. Each switch control circuit 109 and a corresponding voltage conversion circuit 110 form one branch. A first end of each branch is connected to the high-voltage DC/low-voltage DC converter 104, and a second end of each branch is connected to a corresponding second external load. In this way, a voltage of the power battery may be converted into different power supply voltages, supplying power to loads requiring different power supply voltages.

### Embodiment 17

In an embodiment, an on-board power supply 100 includes a first battery 101, an alternating current-direct current conversion apparatus 115, and a voltage conversion apparatus 103. For the first battery 101 and the alternating current-direct current conversion apparatus 115, refer to any one of the foregoing embodiments.

The voltage conversion apparatus 103 includes an external voltage conversion apparatus 103. The external voltage conversion apparatus 103 includes a high-voltage DC/low-voltage DC converter 104.

In the on-board power supply 100, a first end of the high-voltage DC/low-voltage DC converter 104 is connected to the power battery, and a second end of the high-voltage DC/low-voltage DC converter 104 is connected to a second external load.

The high-voltage DC/low-voltage DC converter 104 includes: a second primary conversion circuit, a second isolation conversion circuit, and a second secondary conversion circuit.

A first end of the second primary conversion circuit is connected to the power battery, a second end of the second primary conversion circuit is connected to a first end of the second isolation conversion circuit, a second end of the second isolation conversion circuit is connected to a first end of the second secondary conversion circuit, and a second end of the second secondary conversion circuit is connected to the second external load.

The second primary conversion circuit is configured to: receive a direct current from the power battery, convert the direct current into an alternating current, and transmit the alternating current to a primary winding of the second isolation conversion circuit. The second isolation conversion circuit is configured to: receive the alternating current whose voltage value is a first voltage from the second primary conversion circuit through the primary winding, generate an alternating current whose voltage value is a second voltage on a secondary winding, and transmit the generated alternating current to the second secondary conversion circuit. The second secondary conversion circuit is configured to: receive the alternating current from the secondary winding, convert the alternating current into a direct current, and transmit the direct current to the second external load.

### <Embodiments of a battery system 200 of a vehicle>

An embodiment of this application provides a battery system 200 of a vehicle. The battery system 200 of the vehicle in this embodiment includes the on-board power supply 100 provided in any one of the foregoing embodiments and a second battery 201, where the second battery 201 is a non-power battery of the vehicle.

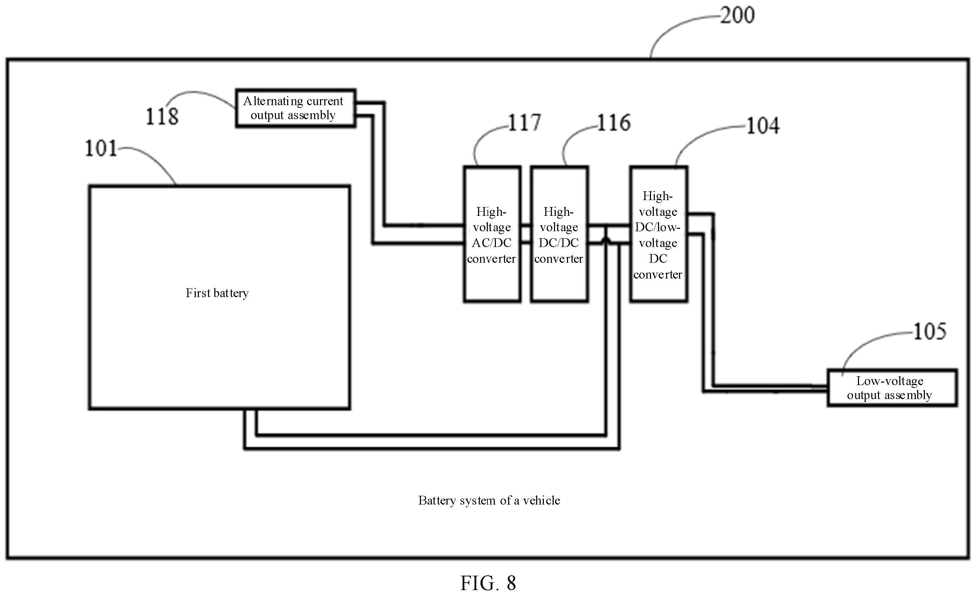

In some embodiments, an embodiment of this application provides a battery system 200 of a vehicle. As shown in FIG. 8, the battery system 200 of the vehicle in this embodiment includes the on-board power supply 100 in any one of the foregoing embodiments and an alternating current-direct current conversion apparatus 115. A first end of the alternating current-direct current conversion apparatus 115 is connected to a first battery 101, and a second end of the alternating current-direct current conversion apparatus 115 is connected to an alternating current electrical load of the vehicle.

Refer to FIG. 8. The alternating current-direct current conversion apparatus 115 includes a high-voltage DC/DC converter 116, a high-voltage AC/DC converter 117, and an alternating current output assembly 118 that are sequentially connected. A first end of the high-voltage DC/DC converter 116 is connected to the first battery 101, a second end of the high-voltage DC/DC converter 116 is connected to a first end of the high-voltage AC/DC converter 117, a second end of the high-voltage AC/DC converter 117 is connected to a first end of the alternating current output assembly 118, and a second end of the alternating current output assembly 118 is connected to the alternating current electrical load.

Refer to FIG. 8. The voltage conversion apparatus 103 includes a high-voltage DC/low-voltage DC converter 104 and a low-voltage output assembly 105 that are connected to each other.

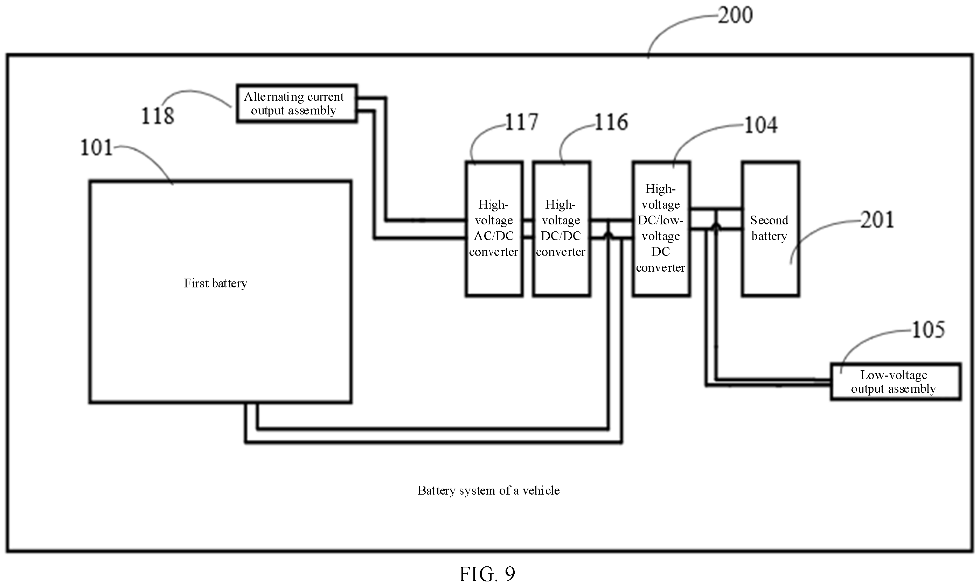

In an embodiment, refer to FIG. 9. The second battery 201 is a non-power battery of the vehicle. The first battery 101 is connected to the second battery 201 through the high-voltage DC/low-voltage DC converter 104.

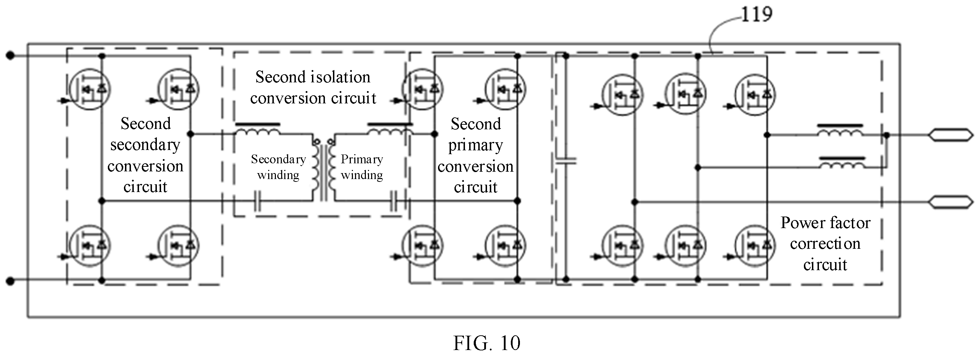

Refer to FIG. 10. The high-voltage DC/DC converter 116 includes a second secondary conversion circuit, a second isolation conversion circuit, and a second primary conversion circuit. The high-voltage AC/DC converter 117 includes a power factor correction circuit 119. The alternating current output assembly 118 includes a switch control circuit 109.

A first end of the second secondary conversion circuit is connected to the first battery 101, a second end of the second secondary conversion circuit is connected to a first end of the second isolation conversion circuit, a second end of the second isolation conversion circuit is connected to a first end of the second primary conversion circuit, a second end of the second primary conversion circuit is connected to a first end of the power factor correction circuit 119, a second end of the power factor correction circuit 119 is connected to a first end of the switch control circuit 109, and the switch control circuit 109 is connected to the alternating current electrical load.

The second secondary conversion circuit is configured to: receive a direct current from the first battery 101, convert the direct current into an alternating current, and transmit the alternating current to a secondary winding of the second isolation conversion circuit. The second isolation conversion circuit is configured to: receive the alternating current whose voltage value is a third voltage from the second secondary conversion circuit through the secondary winding, generate an alternating current whose voltage value is a fourth voltage on a primary winding, and transmit the generated alternating current to the second primary conversion circuit. The second primary conversion circuit is configured to: receive the alternating current from the primary winding, convert the alternating current into a direct current, and transmit the direct current to the power factor correction circuit 119. The power factor correction circuit 119 is configured to convert the received direct current from the second primary conversion circuit into an alternating current. The alternating current from the power factor correction circuit 119 is transmitted to an alternating current electrical load connection through the switch control circuit 109 of the alternating current output assembly 118.

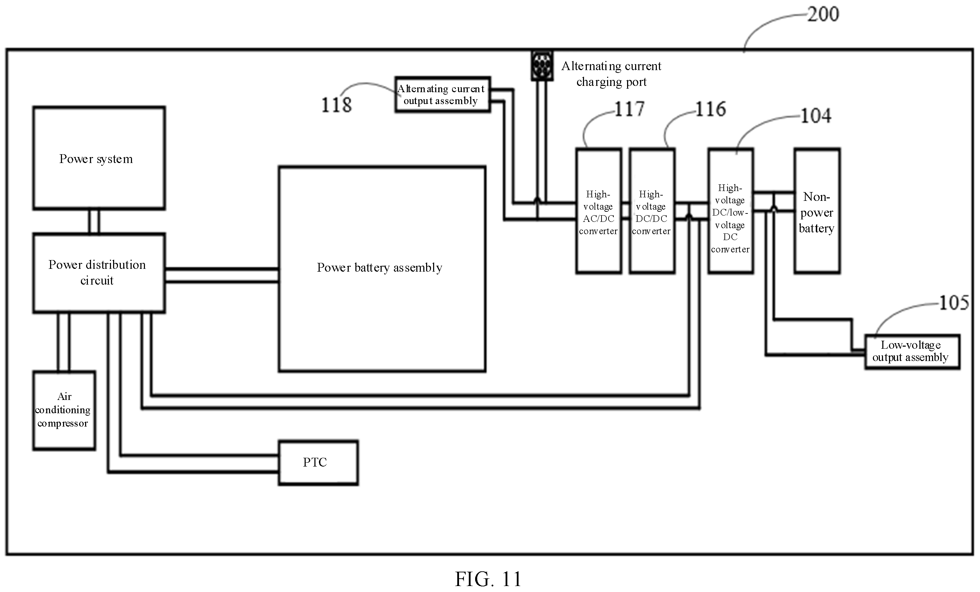

FIG. 11 is another diagram of a battery system 200 of a vehicle. Refer to FIG. 11. The battery system 200 of the vehicle includes a power battery assembly, a power distribution circuit, a voltage conversion apparatus 103, an alternating current-direct current conversion apparatus 115, and a non-power battery.

The power distribution circuit includes at least one fuse and at least one control switch.

The voltage conversion apparatus 103 includes a high-voltage DC/low-voltage DC converter 104 and a low-voltage output assembly 105 that are connected to each other.

For a specific schematic of a circuit of the high-voltage DC/low-voltage DC converter 104, refer to FIG. 6. The low-voltage output assembly 105 includes a switch control circuit 109 and a voltage conversion circuit 110.

A first end of the high-voltage DC/low-voltage DC converter 104 is connected to the power battery assembly, a second end of the high-voltage DC/low-voltage DC converter 104 is connected to a first end of the low-voltage output assembly 105, and a second end of the low-voltage output assembly 105 is connected to a vehicle non-power load.

The alternating current-direct current conversion apparatus 115 includes a high-voltage DC/DC converter 116, a high-voltage AC/DC converter 117, and an alternating current output assembly 118. For specific diagrams of high-voltage DC/DC converter 116 and high-voltage AC/DC converter 117, refer to FIG. 10. The alternating current output assembly 118 includes a switch control circuit 109.

A first end of the high-voltage DC/DC converter 116 is connected to the power battery assembly, a second end of the high-voltage DC/DC converter 116 is connected to a first end of the high-voltage AC/DC converter 117, a second end of the high-voltage AC/DC converter 117 is connected to a first end of the alternating current output assembly 118, and a second end of the alternating current output assembly 118 is connected to the alternating current electrical load.

The power battery assembly supplies power to the vehicle non-power load through the power distribution circuit and the voltage conversion apparatus 103.

The power battery assembly outputs a high-voltage alternating current through the power distribution circuit and the alternating current-direct current conversion apparatus 115, to supply power to the alternating current electrical load. The high-voltage alternating current is an alternating current within a high-voltage standard range, such as 220 V and 380 V.

The non-power battery may also supply power to the non-power load.

The power battery assembly supplies power to a power system of the vehicle through the power distribution circuit. Specifically, the power battery assembly outputs a high-voltage direct current to an inverter, and the inverter converts the high-voltage direct current into a high-voltage alternating current, to drive an alternating current motor to output torque.

The power battery supplies power to an air conditioning compressor, and a PTC (Positive Temperature Coefficient, positive temperature coefficient) heater through the power distribution circuit.

Refer to FIG. 11. An alternating current output from a charging device charges the power battery through an alternating current charging port by using the alternating current-direct current conversion apparatus 115.

With reference to FIG. 10, the power factor correction circuit 119 is configured to: receive an alternating current from the charging device, convert the alternating current into a direct current, and transmit the direct current to the second primary conversion circuit. The second primary conversion circuit is configured to: receive the direct current from the power factor correction circuit 119, convert the direct current into an alternating current, and transmit the alternating current to the second isolation conversion circuit. The second isolation conversion circuit is configured to: receive the alternating current whose voltage value is a first voltage from the second primary conversion circuit through the primary winding, generate an alternating current whose voltage value is a second voltage on a secondary winding, and transmit the generated alternating current to the second secondary conversion circuit. The second secondary conversion circuit is configured to: receive an alternating current from the secondary winding of the second isolation conversion circuit, convert the alternating current into a direct current, and transmit the direct current to the power battery assembly through the power distribution circuit, to charge the power battery.

An alternating current output from the charging device charges the non-power battery through the alternating current charging port by using the alternating current-direct current conversion apparatus 115, and the high-voltage DC/low-voltage DC converter 104 of the voltage conversion apparatus 103.

With reference to FIG. 6 and FIG. 10, the power factor correction circuit 119 is configured to: receive the alternating current from the charging device, convert the alternating current into the direct current, and transmit the direct current to the second primary conversion circuit. The second primary conversion circuit is configured to: receive the direct current from the power factor correction circuit 119, convert the direct current into an alternating current, and transmit the alternating current to the second isolation conversion circuit. The second isolation conversion circuit is configured to: receive the alternating current whose voltage value is a first voltage from the second primary conversion circuit through the primary winding, generate an alternating current whose voltage value is a second voltage on a secondary winding, and transmit the generated alternating current to the second secondary conversion circuit. The second secondary conversion circuit is configured to: receive an alternating current from the secondary winding of the second isolation conversion circuit, convert the alternating current into a direct current, and transmit the direct current to the first primary conversion circuit 106 through the power distribution circuit. The first primary conversion circuit 106 is configured to: receive a direct current from the second secondary conversion circuit, convert the direct current into an alternating current, and transmit the alternating current to a primary winding of the first isolation conversion circuit 107. The first isolation conversion circuit 107 is configured to: receive the alternating current whose voltage value is a third voltage from the first primary conversion circuit 106 through the primary winding, generate an alternating current whose voltage value is a fourth voltage on a secondary winding, and transmit the generated alternating current to the first secondary conversion circuit 108. The first secondary conversion circuit 108 is configured to: receive the alternating current from the secondary winding, convert the alternating current into a direct current, and transmit the direct current to the non-power battery.

In an embodiment, the power battery and the voltage conversion apparatus 103 are detached from the vehicle to form the on-board power supply 100.

In an embodiment, the power battery is detached from the vehicle to form the on-board power supply 100 with the external voltage conversion apparatus 103.

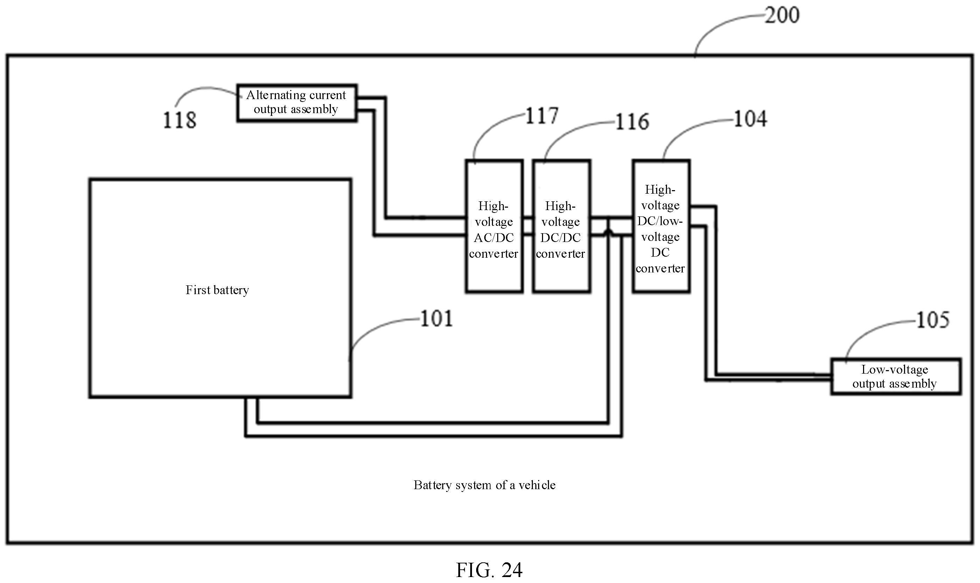

An embodiment of this application provides a battery system 200 of a vehicle. As shown in FIG. 24, the battery system 200 of the vehicle in this embodiment includes the on-board power supply 100 in any one of the foregoing embodiments and a voltage conversion apparatus 103. A first end of the voltage conversion apparatus 103 is connected to the first battery 101, and a second end of the voltage conversion apparatus 103 is connected to a vehicle non-power load.

In an embodiment, the voltage conversion apparatus 103 includes a high-voltage DC/low-voltage DC converter 104 and a low-voltage output assembly 105 that are connected to each other.

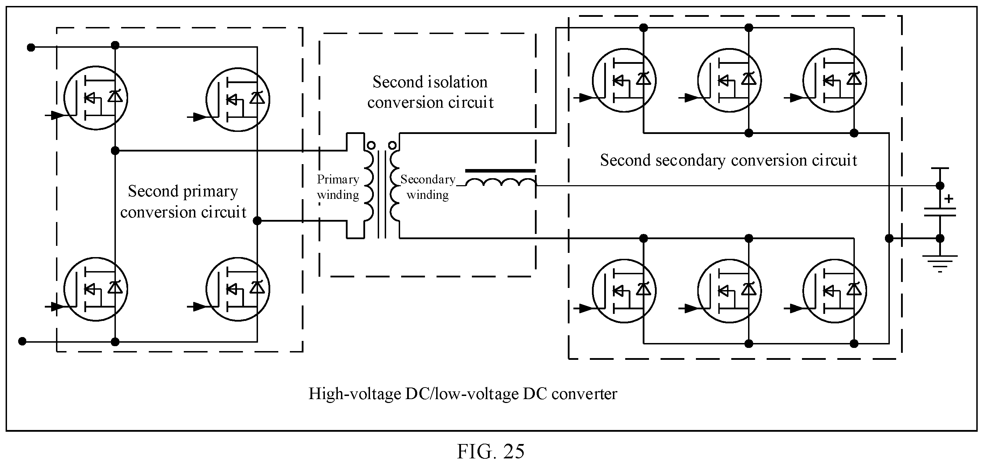

Refer to FIG. 25. The high-voltage DC/low-voltage DC converter 104 includes: a second primary conversion circuit, a second isolation conversion circuit, and a second secondary conversion circuit. The low-voltage output assembly 105 includes a switch control circuit 109 and a voltage conversion circuit 110.

A first end of the second primary conversion circuit is connected to the first battery 101, a second end of the second primary conversion circuit is connected to a first end of the second isolation conversion circuit, a second end of the second isolation conversion circuit is connected to a first end of the second secondary conversion circuit, a second end of the second secondary conversion circuit is connected to a first end of the switch control circuit 109, a second end of the switch control circuit 109 is connected to a first end of the voltage conversion circuit 110, and a second end of the voltage conversion circuit 110 is connected to the second external load.

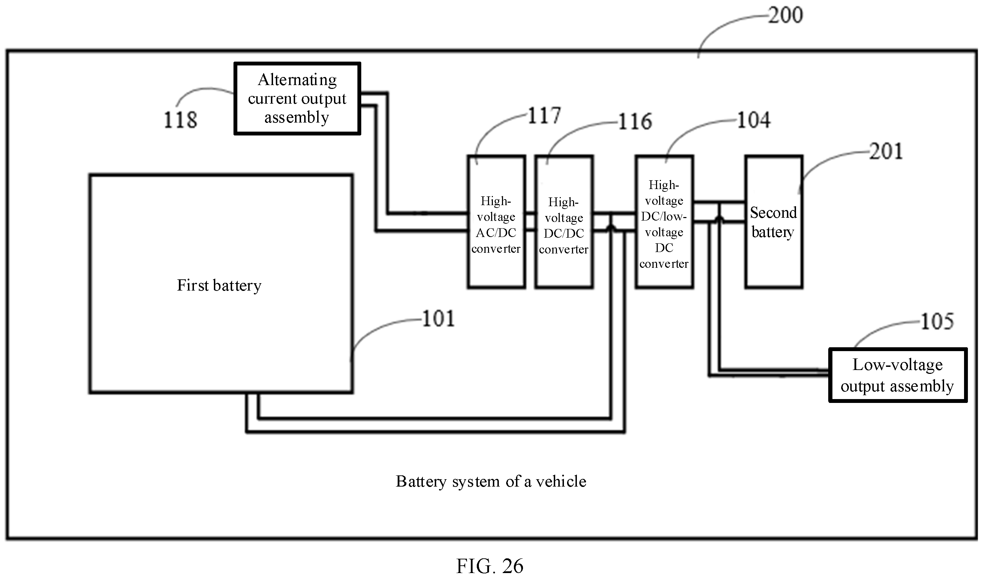

In an embodiment, refer to FIG. 26. The battery system 200 of the vehicle further includes: a second battery 201. The second battery 201 is a non-power battery of the vehicle. The second battery 201 is connected to the high-voltage DC/low-voltage DC converter 104, and the second battery 201 is further connected to the low-voltage output assembly 105.

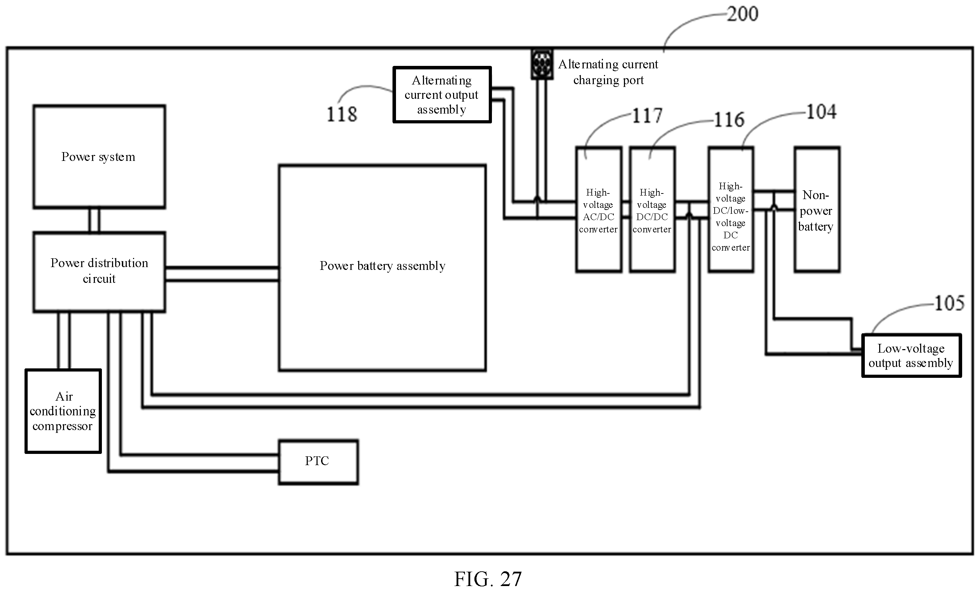

FIG. 27 is another diagram of a battery system 200 of a vehicle. Refer to FIG. 27. The battery system 200 of the vehicle includes a power battery assembly, a power distribution circuit, an alternating current-direct current conversion apparatus 115, a non-power battery, and a voltage conversion apparatus 103.

The power distribution circuit includes at least one fuse and at least one control switch.

The alternating current-direct current conversion apparatus 115 includes a high-voltage DC/DC converter 116, a high-voltage AC/DC converter 117, and an alternating current output assembly 118. For a specific schematic of a circuit of the high-voltage DC/DC converter 116 and the high-voltage AC/DC converter 117, refer to the foregoing embodiments. The alternating current output assembly 118 includes a switch control circuit 109.

A first end of the high-voltage DC/DC converter 116 is connected to the power battery assembly, a second end of the high-voltage DC/DC converter 116 is connected to a first end of the high-voltage AC/DC converter 117, a second end of the high-voltage AC/DC converter 117 is connected to a first end of the alternating current output assembly 118, and a second end of the alternating current output assembly 118 is connected to the alternating current electrical load.

The voltage conversion apparatus 103 includes a high-voltage DC/low-voltage DC converter 104 and a low-voltage output assembly 105 that are connected to each other. For a specific schematic of a circuit of the high-voltage DC/low-voltage DC converter 104, refer to FIG. 25. The low-voltage output assembly 105 includes a switch control circuit 109 and a voltage conversion circuit 110.

A first end of the high-voltage DC/low-voltage DC converter 104 is connected to the power battery assembly, a second end of the high-voltage DC/low-voltage DC converter 104 is connected to a first end of the low-voltage output assembly 105, and a second end of the low-voltage output assembly 105 is connected to a vehicle non-power load.

The power battery assembly supplies power to the vehicle non-power load through the high-voltage DC/low-voltage DC converter 104 and low-voltage output assembly.

The power battery assembly outputs a high-voltage alternating current through the high-voltage DC/DC converter 116, the high-voltage AC/DC converter 117, and the alternating current output assembly 118, to supply power to the alternating current electrical load. The high-voltage alternating current is an alternating current within a high-voltage standard range, such as 220 V and 380 V.

The non-power battery may also supply power to the non-power load.

The power battery assembly supplies power to a power system of the vehicle through the power distribution circuit. Specifically, the power battery assembly outputs a high-voltage direct current to an inverter, and the inverter converts the high-voltage direct current into a high-voltage alternating current, to drive an alternating current motor to output torque.

The power battery supplies power to an air conditioning compressor, and a PTC (Positive Temperature Coefficient, positive temperature coefficient) heater through the power distribution circuit.

Refer to FIG. 27. An alternating current output from the charging device charges the power battery through the alternating current charging port by using the high-voltage AC/DC converter 117 and the high-voltage DC/DC converter 116.

With reference to FIG. 17, the power factor correction circuit 119 is configured to: receive an alternating current from the charging device, convert the alternating current into a direct current, and transmit the direct current to the first primary conversion circuit 106. The first primary conversion circuit 106 is configured to: receive the direct current from the power factor correction circuit 119, convert the direct current into an alternating current, and transmit the alternating current to the first isolation conversion circuit 107. The first isolation conversion circuit 107 is configured to: receive the alternating current whose voltage value is a first voltage from the first primary conversion circuit 106 through the primary winding, generate an alternating current whose voltage value is a second voltage on a secondary winding, and transmit the generated alternating current to the first secondary conversion circuit 108. The first secondary conversion circuit 108 is configured to: receive an alternating current from the secondary winding of the first isolation conversion circuit 107, convert the alternating current into a direct current, and transmit the direct current to the power battery assembly through the power distribution circuit, to charge the power battery.

An alternating current output from the charging device charges the non-power battery through the alternating current charging port by using the high-voltage AC/DC converter 117, the high-voltage DC/DC converter 116, and the high-voltage DC/low-voltage DC converter 104.

With reference to FIG. 17 and FIG. 25, the power factor correction circuit 119 is configured to: receive an alternating current from the charging device, convert the alternating current into a direct current, and transmit the direct current to the first primary conversion circuit 106. The first primary conversion circuit 106 is configured to: receive the direct current from the power factor correction circuit 119, convert the direct current into an alternating current, and transmit the alternating current to the first isolation conversion circuit 107. The first isolation conversion circuit 107 is configured to: receive the alternating current whose voltage value is a first voltage from the first primary conversion circuit 106 through the primary winding, generate an alternating current whose voltage value is a second voltage on a secondary winding, and transmit the generated alternating current to the first secondary conversion circuit 108. The first secondary conversion circuit 108 is configured to receive an alternating current from the secondary winding of the first isolation conversion circuit 107, convert the alternating current into a direct current, and transmit the direct current to the second primary conversion circuit through the power distribution circuit. The second primary conversion circuit is configured to: receive a direct current from the first secondary conversion circuit 108, convert the direct current into an alternating current, and transmit the alternating current to a primary winding of the second isolation conversion circuit. The second isolation conversion circuit is configured to: receive the alternating current whose voltage value is a third voltage from the second primary conversion circuit through the primary winding, generate an alternating current whose voltage value is a fourth voltage on a secondary winding, and transmit the generated alternating current to the second secondary conversion circuit. The second secondary conversion circuit is configured to: receive the alternating current from the secondary winding, convert the alternating current into a direct current, and transmit the direct current to the non-power battery.

### <Embodiments of a vehicle>

An embodiment of this application provides a vehicle, including the battery system 200 of the vehicle in any of the above embodiments.

Embodiments in this specification are all described in a progressive manner. For same or similar parts in embodiments, refer to these embodiments. Each embodiment focuses on a difference from other embodiments. For a related description of an embodiment of an electric vehicle, refer to partial descriptions of the method embodiment.

Specific embodiments of this specification are described above. Other embodiments are within the scope of the following claims. In some cases, the actions or steps described in the claims may be performed in an order different from the order in embodiments and may still achieve a desired result. In addition, a process described in the accompanying drawings does not require a particular order or a sequential order shown to achieve the desired result. In some implementations, multi-task processing and parallel processing are possible or may be advantageous.

Embodiments of this specification may be a system, a method, and/or a computer program product. The computer program product may include a computer-readable storage medium carrying computer instructions that are used to enable a processor to implement various aspects of embodiments of this specification.

The computer-readable storage medium can be a tangible device that can retain and store instructions for use by a computer instruction execution device. The computer-readable storage medium may be, for example, but is not limited to, an electronic storage device, a magnetic storage device, an optical storage device, an electromagnetic storage device, a semiconductor storage device, or any suitable combination thereof. More specific examples (a non-exhaustive list) of the computer-readable storage medium include: a portable computer disk, a hard disk, a random access memory (RAM), a read-only memory (ROM), an erasable programmable read-only memory (EPROM or flash memory), a static random access memory (SRAM), a portable compact disk read-only memory (CD-ROM), a digital versatile disk (DVD), a memory stick, a floppy disk, a mechanical encoded device such as a punched card or a groove protrusion structure storing computer instructions on the punched card or the groove protrusion structure, and any suitable combination thereof. The computer-readable storage medium used herein is not to be construed as a transient signal, for example, a radio wave or another freely propagating electromagnetic wave, an electromagnetic wave propagating through a waveguide or another transmission medium (for example, a light pulse through an optical fiber cable), or an electrical signal transmitted through a wire.

The computer instructions described herein may be downloaded from the computer-readable storage medium to respective computing/processing devices or to an external computer or external storage device through a network, for example, the internet, a local area network, a wide area network, and/or a wireless network. The network may include a copper transmission cable, optical fiber transmission, wireless transmission, a router, a firewall, a switch, a gateway computer, and/or an edge server. A network adapter card or network interface in each computing/processing device receives the computer instructions from the network and forwards the computer instructions for storage in a computer-readable storage medium in each computing/processing device.

The flowcharts and block diagrams in the accompanying drawings show possible implementations of system architectures, functions, and operations of systems, methods, and computer program products according to a plurality of embodiments of this specification. In this regard, each block in the flowcharts or block diagrams may represent a module, a program segment, or a part of the computer instructions, and the module, the program segment, or the part of the computer instructions includes one or more executable computer instructions for implementing a specified logical function. In some alternative implementations, a function marked in the block may also occur in a sequence different from that marked in the accompanying drawings. For example, two consecutive blocks may actually be executed substantially in parallel, and may sometimes be executed in a reverse order, depending on a function. It should also be noted that each block in the block diagrams and/or flowcharts, and a combination of blocks in the block diagrams and/or flowcharts may be implemented by special purpose hardware-based systems that perform a specified function or act, or may be implemented by combinations of special purpose hardware and computer instructions. It is well known to a person skilled in the art that implementation by hardware, implementation by software, and implementation by a combination of software and hardware are all equivalent.

The foregoing has described embodiments of this specification. The foregoing descriptions are examples, not exhaustive, and are not limited to the disclosed embodiments. Without departing from the scope of the described embodiments, many modifications and variations are clear to a person of ordinary skill in the technical field. Selection of terms used in this specification is intended to best describe principles of embodiments, actual applications, or improvements to technologies in the market, or to enable another person of ordinary skill in the art to understand embodiments disclosed in this specification.

## Claims

1. An on-board power supply (100), at least a part of apparatuses of the on-board power supply (100) are detachably connected to a vehicle, wherein the on-board power supply (100) comprises:
a first battery (101), the first battery (101) being a power battery of the vehicle, and the first battery (101) being configured to supply power to an external load when in a detached state; and
an electrical energy conversion apparatus (102), a first end of the electrical energy conversion apparatus (102) being connected to the first battery (101); a second end of the electrical energy conversion apparatus (102) being adapted to be connected to the external load; and in the on-board power supply (100), the electrical energy conversion apparatus (102) being configured to convert electrical energy from the first battery (101) to supply power to the external load.

2. The on-board power supply (100) according to claim 1, wherein the external load comprises a first external load; the electrical energy conversion apparatus (102) comprises a voltage conversion apparatus (103); the first end of the voltage conversion apparatus (103) is connected to the first battery (101); a second end of the voltage conversion apparatus (103) is adapted to be connected to the first external load; and in the on-board power supply (100), the voltage conversion apparatus (103) is configured to: convert a voltage of the first battery (101) and output a direct current to the first external load.

3. The on-board power supply (100) according to claim 2, wherein the voltage conversion apparatus (103) comprises a high-voltage DC/low-voltage DC converter (104) of the vehicle and a low-voltage output assembly (105) of the vehicle, and the high-voltage DC/low-voltage DC converter (104) of the vehicle and the low-voltage output assembly (105) of the vehicle are both vehicle apparatuses removable from the vehicle.

4. The on-board power supply (100) according to claim 3, wherein the high-voltage DC/low-voltage DC converter (104) comprises: a first primary conversion circuit (106), a first isolation conversion circuit (107), and a first secondary conversion circuit (108);
the low-voltage output assembly (105) comprises a switch control circuit (109) and a voltage conversion circuit (110); and
a first end of the first primary conversion circuit (106) is connected to the first battery (101), a second end of the first primary conversion circuit (106) is connected to a first end of the first isolation conversion circuit (107), a second end of the first isolation conversion circuit (107) is connected to a first end of the first secondary conversion circuit (108), a second end of the first secondary conversion circuit (108) is connected to a first end of the switch control circuit (109), a second end of the switch control circuit (109) is connected to a first end of the voltage conversion circuit (110), and a second end of the voltage conversion circuit (110) is connected to the first external load.

5. The on-board power supply (100) according to any one of claims 2 to 4, wherein the voltage conversion apparatus (103) comprises an external voltage conversion apparatus (103), and the external voltage conversion apparatus (103) comprises a high-voltage DC/low-voltage DC converter (104).

6. The on-board power supply (100) according to claim 5, wherein the high-voltage DC/low-voltage DC converter (104) comprises: a first primary conversion circuit (106), a first isolation conversion circuit (107), and a first secondary conversion circuit (108); and
a first end of the first primary conversion circuit (106) is connected to a power battery assembly, a second end of the first primary conversion circuit (106) is connected to a first end of the first isolation conversion circuit (107), a second end of the first isolation conversion circuit (107) is connected to a first end of the first secondary conversion circuit (108), and a second end of the first secondary conversion circuit (108) is connected to the first external load.

7. The on-board power supply (100) according to any one of claims 2 to 6, wherein the on-board power supply (100) further comprises a storage compartment (111), and the first battery (101) and the voltage conversion apparatus (103) are accommodated in the storage compartment (111).

8. The on-board power supply (100) according to claim 7, wherein the storage compartment (111) is provided with a locking mechanism (112), and the locking mechanism (112) is configured to open when an electrical connection between the on-board power supply (100) and the vehicle is disconnected, to allow detachment of the on-board power supply (100).

9. The on-board power supply (100) according to claim 7 or 8, wherein the storage compartment (111) is provided with a low-voltage output interface (113), and the second end of the voltage conversion apparatus (103) is connected to the low-voltage output interface (113) to output a direct current.

10. The on-board power supply (100) according to any one of claims 7 to 9, wherein the storage compartment (111) is further provided with an electrical connection interface (114), the first battery (101) is connected to the electrical connection interface (114), and the first battery (101) is adapted to be electrically connected to the vehicle through the electrical connection interface (114).

11. The on-board power supply (100) according to any one of claims 1 to 10, wherein the external load comprises a second external load; the electrical energy conversion apparatus (102) comprises an alternating current-direct current conversion apparatus (115); a first end of the alternating current-direct current conversion apparatus (115) is connected to the first battery (101); a second end of the alternating current-direct current conversion apparatus (115) is adapted to be connected to the second external load; and in the on-board power supply (100), the alternating current-direct current conversion apparatus (115) is configured to convert a direct current from the first battery (101) into an alternating current for the second external load.

12. The on-board power supply (100) according to claim 11, wherein the alternating current-direct current conversion apparatus (115) comprises a high-voltage DC/DC converter (116), a high-voltage AC/DC converter (117), and an alternating current output assembly (118) that are sequentially connected, and the high-voltage DC/DC converter (116), the high-voltage AC/DC converter (117), and the alternating current output assembly (118) are all vehicle apparatuses removable from the vehicle.

13. The on-board power supply (100) according to claim 11, wherein the alternating current-direct current conversion apparatus (115) comprises a high-voltage DC/DC converter (116), a high-voltage AC/DC converter (117), and an alternating current output assembly (118) that are sequentially connected; and
the high-voltage DC/DC converter (116) and the high-voltage AC/DC converter (117) are vehicle apparatuses removable from the vehicle, and the alternating current output assembly (118) is an external apparatus.

14. The on-board power supply (100) according to claim 12 or 13, wherein the high-voltage DC/DC converter (116) comprises: the first secondary conversion circuit (108), the first isolation conversion circuit (107), and a first primary conversion circuit (106);
the high-voltage AC/DC converter (117) comprises a power factor correction circuit (119);
the alternating current output assembly (118) comprises the switch control circuit (109); and
the first end of the first secondary conversion circuit (108) is connected to the first battery (101), the second end of the first secondary conversion circuit (108) is connected to the first end of the first isolation conversion circuit (107), the second end of the first isolation conversion circuit (107) is connected to a first end of the first primary conversion circuit (106), a second end of the first primary conversion circuit (106) is connected to a first end of the power factor correction circuit (119), a second end of the power factor correction circuit (119) is connected to the first end of the switch control circuit (109), and the second end of the switch control circuit (109) is adapted to be connected to the second external load.

15. The on-board power supply (100) according to any one of claims 11 to 14, wherein the alternating current-direct current conversion apparatus (115) comprises the high-voltage AC/DC converter (117) and the alternating current output assembly (118) that are connected to each other; and
the high-voltage AC/DC converter (117) and the alternating current output assembly (118) are both vehicle apparatuses removable from the vehicle.

16. The on-board portable power supply according to any one of claims 11 to 15, wherein the alternating current-direct current conversion apparatus (115) comprises the high-voltage AC/DC converter (117) and the alternating current output assembly (118) that are connected to each other; and
the high-voltage AC/DC converter (117) is a vehicle apparatus removable from the vehicle, and the alternating current output assembly (118) is an external apparatus.

17. The on-board power supply (100) according to claim 15 or 16, wherein the high-voltage AC/DC converter (117) comprises the power factor correction circuit (119);
the alternating current output assembly (118) comprises the switch control circuit (109); and
the first end of the power factor correction circuit (119) is connected to the first battery (101), the second end of the power factor correction circuit (119) is connected to the first end of the switch control circuit (109), and the second end of the switch control circuit (109) is connected to the second external load.

18. The on-board power supply (100) according to any one of claims 11 to 17, wherein the on-board power supply (100) further comprises the storage compartment (111), and the first battery (101) and the alternating current-direct current conversion apparatus (115) are accommodated in the storage compartment (111).

19. The on-board power supply (100) according to claim 18, wherein the storage compartment (111) is provided with the locking mechanism (112), and the locking mechanism (112) is configured to open when the electrical connection between the on-board power supply (100) and the vehicle is disconnected, to allow detachment of the on-board power supply (100).

20. The on-board power supply (100) according to claim 18 or 19, wherein the storage compartment (111) is provided with an alternating current output interface, and the second end of the alternating current-direct current conversion apparatus (115) is connected to the alternating current output interface.

21. The on-board power supply (100) according to any one of claims 18 to 20, wherein the storage compartment (111) is further provided with the electrical connection interface (114), the first battery (101) is connected to the electrical connection interface (114), and the first battery (101) is adapted to be electrically connected to the vehicle through the electrical connection interface (114).

22. A battery system (200) of a vehicle, comprising:
the on-board power supply (100) according to any one of claims 1 to 21; and
a second battery (201), the second battery (201) being a non-power battery of the vehicle.

23. The battery system (200) according to claim 22, wherein the first battery (101) is connected to the second battery (201) through the high-voltage DC/low-voltage DC converter (104).

24. The battery system (200) according to claim 23, wherein a first end of the second battery (201) is connected to the high-voltage DC/low-voltage DC converter (104), and a second end of the second battery (201) is connected to a vehicle non-power load.

25. A vehicle, comprising the battery system (200) according to any one of claims 22 to 24.
